(19)

**Europäisches Patentamt**

**European Patent Office**

**Office européen des brevets**

(11) **EP 4 657 852 A1**

(12) **EUROPEAN PATENT APPLICATION**
published in accordance with Art. 153(4) EPC

(43) Date of publication:
**03.12.2025 Bulletin 2025/49**

(21) Application number: **24746976.0**

(22) Date of filing: **23.01.2024**

(51) International Patent Classification (IPC):
***H04N 19/103*** (2014.01)

(52) Cooperative Patent Classification (CPC):
**H04N 19/103; H04N 19/159; H04N 19/164**

(86) International application number:
**PCT/CN2024/073710**

(87) International publication number:
**WO 2024/156269 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.01.2023 CN 202310042266**

(71) Applicant: **Nokia Technologies Oy
02610 Espoo (FI)**

(72) Inventor: **LIU, Yutian
Shenzhen, Guangdong 518057 (CN)**

(74) Representative: **Nokia EPO representatives
Nokia Technologies Oy
Karakaari 7
02610 Espoo (FI)**

(54) **PROCESSING METHOD, PROCESSING DEVICE AND STORAGE MEDIUM**

(57) The present disclosure provides a processing method, a processing device and a storage medium. The processing method includes: determining or obtaining, by a coding end, a coded code stream corresponding to a video frame to be coded, according to at least one frame transformation mode and/or a combined transformation mode obtained by combining a plurality of frame transformation modes. A decoded end determines or obtains a decoded video frame, according to at least one frame transformation mode and/or a combined transformation mode obtained by combining a plurality of frame transformation modes and/or at least one code stream. The technical solution according to the present disclosure can improve the performance of coding and decoding a video.

— S10

Determining or obtaining a coded code stream corresponding to a video frame to be coded, according to at least one frame transformation mode and/or a combined transformation mode obtained by combining a plurality of frame transformation modes

**Fig. 3**

## Description

The present disclosure claims the priority from the CN patent application No. 202310042266.1 entitled "PROCESSING METHOD, PROCESSING DEVICE AND STORAGE MEDIUM" filed on January 28, 2023, the content of which is incorporated therein in its entirety by reference.

## FIELD

The present disclosure relates to the technical field of image processing, and more specifically, to a processing method, a processing device and a storage medium.

## BACKGROUND

According to the existing high-efficiency video coding standard protocol (H.266/VVC), a coding technique of a video frame is proposed to implement the improvement of coding performance without significantly increasing computational complexity.

In the course of conceiving and implementing the present disclosure, the inventor has found at least the following problems: in a case of coding a video frame, according to the protocol, each frame is divided into different blocks, and these blocks are then processed according to a preset coding sequence, for example, performing intra-frame prediction on a current block using a neighbor block, without considering the asymmetry of a video signal, thus causing the coding performance of the video frame coding to be limited; and/or, a video frame output after coding or decoding according to the existing protocol is composed of a luminance component and two chrominance components, but high-resolution details, block effects, ringing effects, and the like, of these components also cause the coding performance of the video frame coding to be limited.

The foregoing description is provided to offer general background information, but does not necessarily constitute the prior art.

## SUMMARY

With respect to the above-mentioned technical problems, the present disclosure provides a processing method, a processing device and a storage medium, which are intended to solve the technical problem of how to improve the coding performance of video coding.

The present disclosure provides a processing method, which can be applied to a processing device (e.g., a smart terminal, a server, or the like), and which includes a step of:

S10: determining or obtaining a coded code stream corresponding to a video frame to be coded, according to at least one frame transformation mode and/or a combined transformation mode obtained by combining a plurality of frame transformation modes.

Optionally, acquiring or determining the frame transformation mode and/or the combined transformation mode obtained by combining the plurality of frame transformation modes includes at least one of:

acquiring or determining at least one frame transformation mode and/or a combined transformation mode obtained by combining a plurality of frame transformation modes;

acquiring or determining, according to a preset rule, at least one frame transformation mode and/or a combined transformation mode obtained by combining a plurality of frame transformation modes;

in a case that the video frame to be coded is a video frame of a specific format, acquiring or determining at least one frame transformation mode corresponding to the specific format and/or a combined transformation mode corresponding to the specific format;

in a case that a value of a specific type of signal in the video frame to be coded is greater than a preset signal value, acquiring or determining at least one frame transformation mode which at least includes non-linear transformation and/or filtering processing, and/or a combined transformation mode obtained by combining a plurality of frame transformation modes, which at least comprises non-linear transformation and/or filtering processing;

in a case that a coding parameter corresponding to the video frame to be coded is less than a preset parameter value, and a resolution corresponding to the video frame to be coded is greater than or equal to a preset threshold, acquiring or determining at least one frame transformation mode which at least includes downsampling, and/or a combined transformation mode obtained by combining a plurality of frame transformation modes, which at least comprises downsampling; or

acquiring or determining a frame transformation mode having a minimum rate distortion, and/or a combined transformation mode obtained by combining a plurality of frame transformation modes, which has a minimum rate distortion.

Optionally, the at least one frame transformation mode includes a frame transformation mode and/or a frame transformation mode sequence.

Optionally, a frame transformation mode at each sequence position in the frame transformation mode sequence is acquired or determined according to a preset sequence rule corresponding to each sequence position.

Optionally, the preset sequence rule includes at least one of:

acquiring or determining a frame transformation mode having the minimum rate distortion;

in a case that the video frame to be coded is a video frame of a specific format, acquiring or determining a frame transformation mode corresponding to the specific format;

in a case that a value of a specific type of signal in the video frame to be coded is greater than a preset signal value, acquiring or determining the frame transformation mode whose mode type is at least one of non-linear transformation or filtering processing; or

in a case that the coding parameter corresponding to the video frame to be coded is less than a preset parameter value, and a resolution corresponding to the video frame to be coded is greater than or equal to a preset threshold, acquiring or determining the frame transformation mode whose mode type is downsampling.

Optionally, the step S10 includes steps of:

S11: processing the video frame to be coded, according to the at least one frame transformation mode and/or the combined transformation mode obtained by combining the plurality of frame transformation modes; and

S12: determining or obtaining the coded code stream corresponding to the video frame having been subject to image processing.

Optionally, the step S11 includes at least one of:

performing at least one image processing on the video frame to be coded, according to the at least one frame transformation mode and/or the combined transformation mode obtained by combining the plurality of frame transformation modes; or

performing image processing on the video frame to be coded in sequence according to at least one frame transformation mode which is selected each time, and/or a combined transformation mode obtained by combining a plurality of frame transformation modes, which is selected each time.

Optionally, performing at least one image processing on the video frame to be coded according to the combined transformation mode obtained by combining the plurality of frame transformation modes includes: determining all frame transformation modes included in the combined transformation mode obtained by combining the plurality of frame transformation modes, and performing simultaneously at least one image processing on the video frame to be coded according to all the frame transformation modes included in the combined transformation mode.

Optionally, the step S12 includes at least one of:

coding the video frame having been subject to image processing, to determine or obtain the coded code stream;

coding the video frame having been subject to image processing, and the at least one frame transformation mode and/or the combined transformation mode, to determine or obtain the coded code stream;

coding the video frame having been subject to image processing, and the at least one frame transformation mode and/or the combined transformation mode corresponding to each image processing, to determine or obtain the coded code stream; or

coding the video frame having been subject to image processing, the at least one frame transformation mode and/or the combined transformation mode corresponding to each image processing, and an image processing sequence corresponding to the image processing, to determine or obtain the coded code stream.

The present disclosure further provides a processing method, which can be applied to a processing device (e.g., a smart terminal, a server, or the like), and which includes a step of:
S20: determining or obtaining a decoded video frame, according to at least one frame transformation mode and/or a combined transformation mode obtained by combining a plurality of frame transformation modes and/or at least one code stream.

Optionally, the at least one frame transformation mode includes a frame transformation mode and/or a frame transformation mode sequence. Optionally, the method further includes at least one of:

decoding the code stream, to determine or obtain a video frame having been subject to image processing, and/or the at least one frame transformation mode and/or the combined transformation mode obtained by combining the plurality of frame transformation modes; or

decoding the code stream, to determine or obtain a video frame having been subject to image processing, an image processing sequence, and/or the at least one frame transformation mode and/or the combined transformation mode obtained by combining the plurality of frame transformation modes.

Optionally, the step S20 includes at least one of:

taking the video frame having been subject to image processing as the decoded video frame;

performing inverse processing on the video frame having been subject to image processing, according to the at least one frame transformation mode and/or the combined transformation mode obtained by combining the plurality of frame transformation modes, to obtain the decoded video frame; or

performing inverse processing on the video frame having been subject to image processing, according to the at least one frame transformation mode and/or the combined transformation mode obtained by combining the plurality of frame transformation modes, as well as the image processing sequence, to obtain the decoded video frame.

The present disclosure further provides a processing apparatus, which includes:
a coding module for determining or obtaining a coded code stream corresponding to a video frame to be coded, according to at least one frame transformation mode and/or a combined transformation mode obtained by combining a plurality of frame transformation modes.

The present disclosure further provides a processing apparatus, which includes:
a decoding module for determining or obtaining a decoded video frame, according to at least one frame transformation mode and/or a combined transformation mode obtained by combining a plurality of frame transformation modes and/or at least one code stream.

The present disclosure also provides a processing device, which includes: a memory and a processor, wherein the memory has a computer program thereon, which, when executed by the processor, implements the step of any one of the processing methods as described above. The processing device in the present disclosure may be a smart terminal, or may be a server, or the like.

The present disclosure also provides a storage medium, having a computer program stored thereon, which, when executed by a processor, implements the step of any one of the processing methods as described above.

As described above, the processing method according to the present disclosure can be applied to a processing device, and determine or obtain a coded code stream corresponding to a video frame to be coded, according to at least one frame transformation mode and/or a combined transformation mode obtained by combining a plurality of frame transformation modes. With the above technical solution, image processing can be performed on the video frame to be coded according to a frame transformation mode and/or a combined transformation mode, such that the image processing can be performed by utilizing the asymmetry of the video signal prior to coding the video frame, to thus obtain the coding gain in the subsequent coding process and improve the coding performance of the video coding.

## BRIEF DESCRIPTION OF THE DRAWINGS

The accompanying drawings, which are incorporated into the specification and constitute a part thereof, show embodiments in line with the present disclosure, and explain, together with the specification, the principle of the present disclosure. In order to illustrate the technical solution of the embodiments of the present disclosure more clearly, brief introduction of the drawings required in the description of the embodiments will be provided below. Apparently, those skilled in the art could obtain other drawings on the basis of these drawings, without paying creative efforts.

Fig. 1 illustrates a schematic diagram of a hardware structure of a mobile terminal for implementing various embodiments of the present disclosure;

Fig. 2 illustrates a diagram of an architecture of a communication network system provided by embodiments of the present disclosure;

Fig. 3 illustrates a flowchart of a processing method according to a first embodiment;

Fig. 4 illustrates a schematic diagram of a video frame to be coded in the processing method according to the first embodiment;

Fig. 5 illustrates a schematic diagram of a horizontally flipped video frame in the processing method according to the first embodiment;

Fig. 6 illustrates a schematic diagram of horizontal flip in the processing method according to the first embodiment;

Fig. 7 illustrates a schematic diagram of a vertically flipped video frame in the processing method according to the first embodiment;

Fig. 8 illustrates a schematic diagram of vertical flip in the processing method according to the first embodiment;

Fig. 9 illustrates a schematic diagram of a video frame rotated 90 degrees to the left in the processing method according to the first embodiment;

Fig. 10 illustrates a schematic diagram of left rotation by 90 degrees in the processing method according to the first embodiment;

Fig. 11 illustrates a schematic diagram of a video frame rotated 90 degrees to the right in the processing method according to the first embodiment;

Fig. 12 illustrates a schematic diagram of right rotation by 90 degrees in the processing method according to the first embodiment;

Fig. 13 illustrates a schematic diagram of a video frame rotated 180 degrees in the processing method according to the first embodiment;

Fig. 14 illustrates a schematic diagram of 180-degree rotation in the processing method according to the first embodiment;

Fig. 15 illustrates a schematic diagram of a downsampled video frame in the processing method according to the first embodiment;

Fig. 16 illustrates a schematic diagram of downsampling in the processing method according to the first embodiment;

Fig. 17 illustrates a schematic diagram of neural network-based transformation in the processing method according to the first embodiment;

Fig. 18 illustrates a schematic diagram of a coding framework in the processing method according to the first embodiment;

Fig. 19 illustrates a schematic diagram of mode selection in the processing method according to the first embodiment;

Fig. 20 illustrates a flowchart of a processing method according to a second embodiment;

Fig. 21 illustrates a schematic diagram of multiple image processing in the processing method according to the first embodiment;

Fig. 22 illustrates a flowchart of a processing method according to a third embodiment;

Fig. 23 illustrates a schematic diagram of a processing device provided by embodiments of the present disclosure; and

Fig. 24 illustrates a schematic diagram of a further processing device provided by embodiments of the present disclosure.

The objective, functionality features and advantages of the present disclosure will be further described in conjunction with the embodiments and with reference to the accompanying drawings. The embodiments of the present disclosure explicitly shown in the drawings will be detailed hereinafter. Those drawings and literal description are provided to explain the concepts of the present disclosure for those skilled in the art, with reference to the specific embodiments, rather than limiting the scope of the conception of the present disclosure in any manner.

## DETAILED DESCRIPTION OF EMBODIMENTS

Example embodiments will now be described in detail while shown correspondingly in the accompanying drawings. If the following description involves the drawings, the same numerals in different drawings refer to the same or similar elements, unless specified otherwise. The implementations described in the following embodiments do not represent all implementations in line with the present disclosure. Instead, they are only examples of devices and methods consistent with some aspects of the present disclosure as stated in the appended claims.

It is noted that the terms "include," "comprise," or any other variant thereof herein are intended to cover a non-exclusive inclusion, such that a process, method, article, or device including a series of elements not only include those elements, but also include other elements not listed explicitly, or further include inherent elements of such a process, method, article, or device. Unless specified otherwise, elements defined by the expression "including one ..." do not exclude presence of additional identical elements in the process, method, article, or device including those elements. In addition, components, features, and elements with the same name in different embodiments of the present disclosure may convey the same meaning, or may be different in meaning, and the specific meanings thereof need to be determined based on the explanation in the specific embodiment or further in conjunction with the context in the specific embodiment.

It would be appreciated that, although terms such as "first," "second," "third," and the like, are used herein for describing various elements, these elements should not be limited by these terms. These terms are only used for distinguishing one element from another element. For example, first information may also be called second information, and similarly, the second information may also be called the first information, without departing from the scope of the present disclosure. As used herein, the term "if" may be construed to mean "when" or "upon" or "in response to determining," depending on the context. Further, the singular form "one," "a/an," and "the" as used herein is intended to cover the plural form, unless specified otherwise in the context. It should be further understood that, such terms as "comprise" and "include" indicate the existence of the features, steps, operations, elements, components, items, types and/or groups, but do not exclude the existence, emergence or addition of one or more other features, steps, operations, elements, components, items, types and/or groups. The terms "or," "and/or," "comprises at least one of," or the like, as used herein, are explained to be inclusive, or indicate any one or any combination. For example, "comprising any one of: A, B, C" means "comprising any one of: A; B; C; A and B; A and C; B and C; A and B and C." For another example, "A, B or C" or "A, B and/or C" means "any one of: A; B; C; A and B; A and C; B and C; A and B and C." Exceptions to this definition occur only when combinations of components, functions, steps, or operations are inherently mutually exclusive in some ways.

It is to be understood that, although respective steps in the flowchart according to the embodiments of the present disclosures are shown in sequence as indicated by arrows, these steps are not necessarily executed in the order indicated by the arrows. Unless explicitly indicated otherwise, execution of these steps is not limited to follow a strict order, which may be executed in other order. Moreover, at least a part of steps as shown in the drawings may include a plurality of sub-steps or a plurality of stages. These sub-steps or stages are not necessarily completed at the same time but can be implemented at different times, and may not be performed strictly following the execution order but can be performed in turn or alternately with at least part of other steps, sub-steps of other steps, or stages.

Depending on the context, the term "if" or "in case" as used herein may be read as "when" or "upon" or "in response to determining" or "in accordance with a determination" or "in response to detecting." Likewise, depending on the context, the phrase "if determining" or "if detecting (the stated condition or event)" may be read as "when determining" or "in response to determining" or "when detecting (the stated condition or event)" or "in response to detecting (the stated condition or event)."

It is noted that the step numbers such as S10, S20 and the like, as used herein, are intended to facilitate clear and concise description of the corresponding content, without constituting a substantial limitation to the sequence. In practice, those skilled in the art may perform S20 before S10, or the like, which should also fall within the scope of protection described herein.

It would be appreciated that the specific embodiments described herein are only used to explain the present disclosure, rather than limiting the present disclosure.

In the following description, the postfix such as "module," "component," or "unit" for indicating an element is only employed for ease of describing the present disclosure, which does not convey any specific meaning. Thus, the "module," "component," or "unit" may be used interchangeably.

The processing device in the present disclosure may be a smart terminal, or may be a server or the like. The smart terminal may be implemented in various forms. For example, the smart terminal described herein may include a mobile terminal such as a mobile phone, a tablet computer, a notebook computer, a laptop computer, a Personal Digital Assistant (PDA), a Portable Media Player (PMP), a navigation device, a wearable device, a smart bracelet, a pedometer, or the like, and a fixed terminal such as a digital TV, a desktop computer, or the like.

Hereinafter, the mobile terminal is taken as an example for illustration. It would be appreciated by those skilled in the art that, in addition to elements specifically for a movement purpose, the configuration according to the implementations of the present disclosure can be applied to fixed terminals.

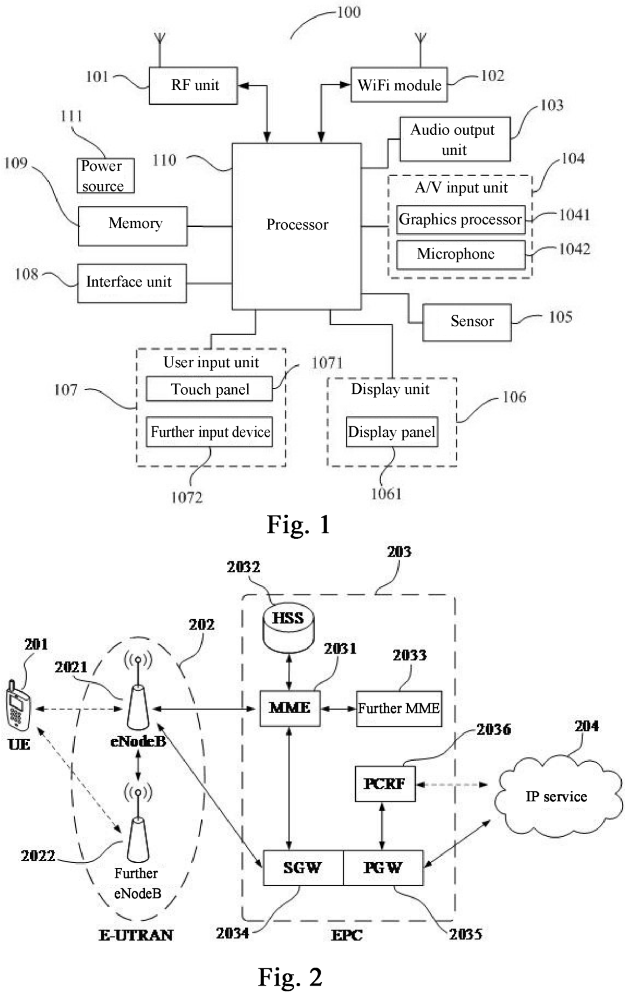

Refer to Fig. 1, which illustrates a schematic diagram of a hardware structure of a mobile terminal for implementing various embodiments of the present disclosure. The mobile terminal 100 may include: an RF (Radio Frequency) unit 101, a Wifi module 102, an audio output unit 103, an A/V (Audio/Video) input unit 104, a sensor 105, a display unit 106, a user input unit 107, an interface unit 108, a memory 109, a processor 110, a power source 111, and the like. It would be appreciated by those skilled in the art that the structure of the mobile terminal as shown in Fig. 1 does not constitute a limitation to the mobile terminal, and the mobile terminal may include more or fewer components than those shown in Fig. 1, or a combination of some components, or an arrangement of different components.

Hereinafter, reference will be made to Fig. 1 to introduce in detail respective components of the mobile terminal.

The RF unit 101 can be used for receiving or transmitting signals during reception and transmission of information or during phone calls. Specifically, the RF unit 101 can transmit the received downlink information of the base station to the processor 110 for processing, and also transmit the uplink data to the base station. In general, the RF unit 101 includes, but is not limited to, an antenna, at least one amplifier, a transceiver, a coupler, a low noise amplifier, a duplexer, and the like. In addition, the RF unit 101 can communicate with a network and other devices through wireless communication. For the wireless communication, any communication standard or protocol can be adopted, including, but not limited to, GSM (Global System of Mobile communication), GPRS (General Packet Radio Service), CDMA2000 (Code Division Multiple Access 2000), WCDMA (Wideband Code Division Multiple Access), TD-SCDMA (Time Division-Synchronous Code Division Multiple Access), FDD-LTE (Frequency Division Duplexing-Long Term Evolution), TDD-LTE (Time Division Duplexing-Long Term Evolution), 5G, and the like.

WiFi belongs to a short-range wireless transmission technology. The mobile terminal can assist a user in receiving and sending emails, browsing webpages, accessing streaming media, and the like, by means of the WiFi module 102 that provides wireless broadband Internet access to the user. Although shown in Fig. 1, it may be understood that the WiFi module 102 is not an essential component of the mobile terminal, which may be omitted as needs, without changing the scope of substance of the invention.

The audio output unit 103 can convert audio data received by the RF unit 101 or the WiFi module 102 or stored in the memory 109 into an audio signal and output the same as a sound when the mobile terminal 100 in a call signal receiving mode, a call mode, a recording mode, a voice recognition mode, a broadcast receiving mode, or the like. Moreover, the audio output unit 103 can also provide audio output (e.g., a call signal receiving sound, a message receiving sound, and the like) related to a specific functionality performed by the mobile terminal 100. The audio output unit 103 may include a speaker, a buzzer, or the like.

The A/V input unit 104 is used for receiving an audio or video signal. The A/V input unit 104 may include a graphics processor (Graphics Processing Unit, GPU) 1041 and a microphone 1042, where the graphics processor 1041 can process image data of a still image or a video obtained by an image capture device (e.g., a camera) in a video capture mode or in an image capture mode. The processed image frame can be displayed on the display unit 106. The image frame processed by the graphics processor 1041 can be stored in the memory 109 (or other storage medium), or transmitted via the RF unit 101 or the WiFi module 102. The microphone 1042 can receive a sound (audio data) via the microphone 1042 in an operation mode such as a call mode, a recording mode, a voice recognition mode, or the like, and can process the sound into audio data. In the call mode, the processed audio (voice) data can be converted into a format that can be sent to a mobile communication base station via the RF unit 101. The microphone 1042 can implement various types of noise cancellation (or suppression) algorithms to cancel (or suppress) noise or interference generated in the process of receiving and transmitting an audio signal.

The mobile terminal 100 further includes at least one type of sensor 105, for example, a light sensor, a motion sensor, or others sensors. Optionally, the optical sensor includes an ambient light sensor, and a proximity sensor. Optionally, the ambient light sensor can adjust the brightness of the display panel based on the brightness of the ambient light, and the proximity sensor can turn off the display panel 1061 and/or the backlight when the mobile terminal 100 is moved to the ear. As a type of the motion sensor, an accelerometer can detect a magnitude of acceleration in various directions (generally, in three axes), detect a magnitude and a direction of gravity when being stationary, and can be used to identify an application of a phone posture (e.g., switching between horizontal and vertical screen, related games, magnetometer posture calibration), vibration recognition-related functions (e.g. pedometer, tapping), and the like. For others sensors that can be installed on a mobile phone, for example, a fingerprint sensor, a pressure sensor, an iris sensor, a molecular sensor, a gyroscope, a barometer, a hygrometer, a thermometer, an infrared sensor, and the like, details are omitted herein for brevity.

The display unit 106 is used for displaying information input by a user or information provided to the user. The display unit 106 may include a display panel 1061 which can be configured in the form of a Liquid Crystal Display (LCD), an Organic Light-Emitting Diode (OLED), or the like.

The user input unit 107 can be used for receiving input digital or character information, and generating a key signal input related to user settings and function control of the mobile terminal. Optionally, the user input unit 107 may include a touch control panel 1071 and a further input device 1072. The touch control panel 1071, also referred to as a touch screen, can collect user's touch operations thereon or adjacent thereto (e.g., the user's operation performed on or near the touch panel 1071 using any suitable object or accessory such as a finger, a stylus, or the like), and can drive a corresponding connection device according to a preset program. The touch panel 1071 may include two parts, namely a touch detection device and a touch controller. Optionally, the touch detection device can detect a user's touch position, detect a signal caused by the touch operation, and transmit the signal to the touch controller; the touch controller can receive touch information from the touch detection device, convert the same into touch-point coordinates, then transmit the touch-point coordinates to the processor 110, and can receive a command from the processor 110 and execute the command. In addition, the touch panel 1071 can be of various types, for example, a resistive type, a capacitive type, an infrared type, a surface acoustic wave type, or the like. In addition to the touch panel 1071, the user input unit 107 may include a further input device 1072. Optionally, the further input device 1072 may include, but is not limited to, one or more of a physical keyboard, a function key (e.g., a volume control key, a switch key, or the like), a trackball, a mouse, a joystick, or the like, which is not specifically limited herein.

Optionally, the touch panel 1071 can cover the display panel 1061. Upon detecting a touch operation thereon or adjacent thereto, the touch panel 1071 transmits the touch operation to the processor 110 to determine a type of the touch event, and the processor 110 then provides a corresponding visual output on the display panel 1061 based on the type of the touch event. Although the touch panel 1071 and the display panel 1061 in Fig. 1 are two independent components to implement the input and output functions of the mobile terminal, in some embodiments, the touch panel 1071 and the display panel 1061 can be integrated to implement the input and output functions of the mobile terminal, which is not specifically limited herein.

The interface unit 108 is used as an interface through which at least one external device can be connected to the mobile terminal 100. For example, the external device may include a wired or wireless headset port, an external power source (or battery charger) port, a wired or wireless data port, a memory card port, a port for connecting a device with an identification module, an audio input/output (I/O) port, a video I/O port, a headphone port, or the like. The interface unit 108 can be used for receiving input (e.g., data information, power, or the like) from an external device, and transmitting the received input to one or more elements within the mobile terminal 100, or can be used for transmitting data between the mobile terminal 100 and an external device.

The memory 109 can be used for storing software programs and various data. The memory 109 may mainly include a program storage area and a data storage area. Optionally, the program storage area can store an operating system, an application program required for at least one function (e.g., a sound playing function, an image playing function, or the like), or the like; the data storage area can store data (e.g., audio data, a phonebook, or the like) created based on the use of the mobile phone. In addition, the memory 109 may include a highspeed random access memory, and may include a nonvolatile memory, for example, at least one disk storage device, a flash memory device, or other volatile solidstate storage device.

The processor 110 is a control center of the mobile terminal, which can connect respective parts of the entire mobile terminal using various interfaces and lines, and is capable of running or executing software programs and/or modules stored in the memory 109, calling data stored in the memory 109, and performing various functions of the mobile terminal and processing data, so as to monitor the mobile terminal as a whole. The processor 110 may include one or more processing units. Preferably, the processor 100 may be integrated with an application processor and a model processor. Optionally, the application processor is mainly responsible for processing the operating system, the user interface, the application program, and the like, and the modem processor is mainly responsible for processing wireless communication. It would be appreciated that the modem processor may not be integrated into the processor 110.

The mobile terminal 100 may also include a power source 111 (e.g., a battery) for supplying power to the respective components. Preferably, the power source 111 can be logically connected to the processor 110 through a power source management system, so as to implement functions such as charging, discharging and power consumption management, and the like, by means of the power source management system.

Although not shown in Fig. 1, the mobile terminal 100 may further include a Bluetooth module, and the like. Details thereof will be omitted herein for brevity.

In order to facilitate understanding of the embodiments of the present disclosure, description below will be made on a communication network system on which the mobile terminal of the present disclosure is based.

Refer to Fig. 2, which illustrates a diagram of an architecture of a communication network system provided by the embodiments of the present disclosure. The communication network system is an LTE system of a universal mobile communication technology that includes a UE (User Equipment) 102, an E-UTRAN (Evolved UMTS Terrestrial Radio Access Network) 202, an EPC (Evolved Packet Core) 203, and an IP service 204 of an operator, which are communicatively connected in sequence.

Optionally, the UE 201 may be the terminal 100 described above. Details thereof are omitted herein for brevity.

The E-UTRAN 202 includes an eNodeB 2021, a further eNodeB 2022, and the like. Optionally, the eNodeB 2021 may be connected to the further eNodeB 2022 via a backhaul (e.g., an X2 interface), and the eNodeB 2021 is connected to the EPC 203, and the eNodeB 2021 can provide access from the UE 201 to the EPC 203.

The EPC 203 may include an MME (Mobility Management Entity) 2031, an HSS (Home Subscriber Server) 2032, a further MME 2033, an SGW (Serving Gate Way) 2034, a PGW (PDN Gate Way) 2035, a PCRF (Policy and Charging Rules Function) 2036, and the like. Optionally, the MME 2031 is a control node for processing signaling between the UE 201 and the EPC 203, and providing bearer and connection management. The HSS 2032 is used to provide some registers for managing functions such as a home location register (not shown) and the like, and store some user-specific information related to service characteristics, data rate, and the like. All the user data can be transmitted via the SGW 2034, the PGW 2035 can provide IP address allocation and other functions for the UE 201, and the PCRF 2036 is a policy and charging control policy decision point for service data flows and IP bearer resources, which can select and provide available policy and charging control decisions for a policy and charging execution function unit (not shown).

The IP service 204 may include the Internet, an intranet, an IMS (IP Multimedia Subsystem), or other IP services.

Although the introduction has been provided above with the LTE system as an example, those skilled in the art should be aware that the present disclosure is not only applicable to the LTE system, but also to other wireless communication systems such as GSM, CDMA2000, WCDMA, TD-SCDMA, 5G, new network system (e.g., 6G) developed in the future, and the like, which is not limited specifically herein.

On the basis of the hardware structure of the mobile terminal and the communication network system as described above, various embodiments of the present disclosure are proposed.

First Embodiment

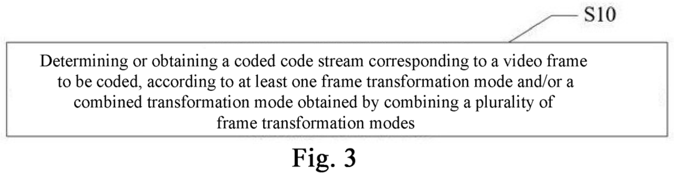

Refer to Fig. 3, which illustrates a schematic diagram of a flowchart of the first embodiment of the processing method of the present disclosure. In this embodiment, the processing method of the present disclosure can be applied to a processing device (e.g., a smart terminal or a server), and include a step of:

S10: determining or obtaining a coded code stream corresponding to a video frame to be coded, according to at least one frame transformation mode and/or a combined transformation mode obtained by combining a plurality of frame transformation modes.

In the embodiment, a processing device first determines a frame of image to be predicted, and acquires or determines a first color component block to be predicted in the frame of image, as well as second color component information corresponding to the first color component block. Optionally, the processing device may be a smart terminal such as a mobile phone, a computer, and the like, or may be a server, or may further be a cloud server.

Optionally, the processing device can store various images and videos in advance, and can select an image to be predicted from the various images as the frame of image. Alternatively, the processing device extracts a frame of image from a video sequence. Alternatively, the processing device receives images and videos input by a user, and extracts a frame of image from the images or videos for prediction. Alternatively, the processing device receives images or videos sent by other network devices, and extracts a frame of image from the images and videos for prediction. At this time, the processing device can establish a communication connection with a network device located at the network side of the mobile communication system in advance, so that the network device can send images or videos to the terminal device through the communication connection, and the terminal device can receive the images or videos.

Optionally, the video frame to be coded may be a frame of image. Prior to coding the video frame, the video frame can be processed first according to at least one frame transformation mode and/or a combined transformation mode obtained by combining a plurality of frame transformation modes, and then be coded to determine or obtain a corresponding coded code stream. Therefore, the coding performance can be improved by utilizing the asymmetry of the video signal. Optionally, during coding, a processing module can be introduced in the coding model, which supports a plurality of frame transformation modes (e.g., geometric transformation, downsampling, other linear and nonlinear transformation, and the like) and/or a combined transformation mode obtained by combining the frame transformation modes, and the processing module performs mode transformation on the video frame, and select a mode having the minimum rate distortion from all supported frame transformation modes and/or the combined transformation mode in the course of mode transformation.

Optionally, the coding gain of the mode transformation is due to the asymmetry of the video signal. For example, coding is performed in an order from top left to bottom right, or from bottom right to top left. The two coding methods for a pixel block in a video frame are different in terms of reference object and redundancy removal degree, and the resulting coding effects thereof are thus different. Accordingly, in the embodiment, more diverse coding transformation methods and more coding orders are provided, and optimal candidates are selected therefrom, to improve the coding performance.

Optionally, the processing device may be a coding end having a coding function. Frame transformation can be performed on the video frame to be coded by means of the processing module; during the frame transformation, a transformation mode having the minimum rate distortion can be selected from the plurality of frame transformation modes and/or the combined transformation mode for frame transformation, and after the frame transformation is completed, the video frame having been subject to the frame transformation is coded to obtain a coded code stream, or the video frame having been subject to the frame transformation and the transformation mode are coded to obtain a coded code stream. Moreover, during the frame transformation, at least one frame transformation mode can be selected for frame transformation, or a combined transformation mode obtained by combining multiple frame transformation modes can be selected jointly for frame transformation of the video frame. Moreover, when multiple frame transformation modes are selected, the same type of frame transformation modes may be selected, or different types of frame transformation modes may be selected.

Optionally, the frame transformation mode may include at least one of geometric transformation, downsampling, upsampling, linear transformation, non-linear transformation, and filtering processing. Optionally, the geometric transmission includes at least one of horizontal flip, vertical flip, 180-degree flip, left rotation by 90 degrees, right rotation by 90 degrees, and rotation by a preset angle; the non-linear transformation includes at least one of neural network transformation, high-order transformation, and deformation of a neural network; and the linear transformation includes an image processing mode based on a linear transformation formula.

It is noted that the frame transformation modes in this embodiment are not limited to the geometric transformation, downsampling, upsampling, the linear transformation, the non-linear transformation, and the like, as mentioned above, which are only provided herein as examples for illustration.

Optionally, filtering processing may include SAO (Sample Adaptive Offset), Deblocking Filter (dbf), ALF (Adaptive Loop Filter), neural network-based filter, and the like. Furthermore, dbf is used for removing the block boundary effect caused by block coding; SAO includes adding a different compensation value to a pixel value of each category by classifying based on pixel values of samples and gradient values of surrounding blocks, thus enabling a reconstructed image to be closer to the original image; and ALF includes applying enhanced filtering to a reconstructed image by means of a Wiener filter, such that the reconstructed image can be closer to the original image. Optionally, when performing filtering processing on the video frame to be coded, filtering adjustment processing may be performed on pixel points in the video frame to be coded based on a preset adjustment filter coefficient.

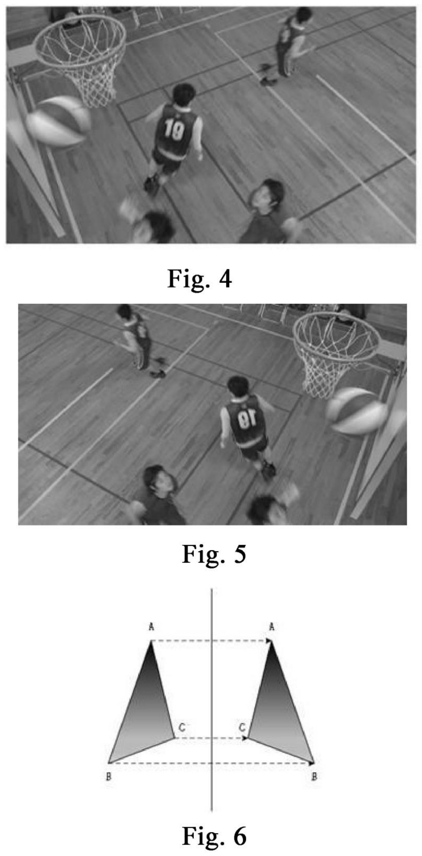

Optionally, as shown in Fig. 4, assumed that the coded image contains a video frame to be coded and has a size of 832 × 480 (i.e., W = 832, H = 480), the image format may be the format of YUV = 4:2:0. If it is required to perform transformation processing on the video frame to be coded by means of at least one frame transformation mode, and the frame transformation mode is specifically horizontal flip in the geometric transformation, the video frame in Fig. 4 is horizontally flipped to obtain the video frame as shown in Fig. 5. When horizontal flip is performed, referring to Fig. 6, the pixel points A, B and C are horizontally flipped. Moreover, when horizontal flip is performed, if an image with a width of W = 832 and a height of H = 480 is input, the upper left, upper right, lower left and lower right coordinates thereof are respectively (0, 0), (0, 831), (479, 0) and (479, 831); when horizontal flip is performed, the first row of the image can be flipped horizontally, i.e., H = 0, and all (0, x) and (0,831-x) image pairs are swapped, i.e., x =0 through x = 415. The same horizontal flip operation can be performed for all rows in the image.

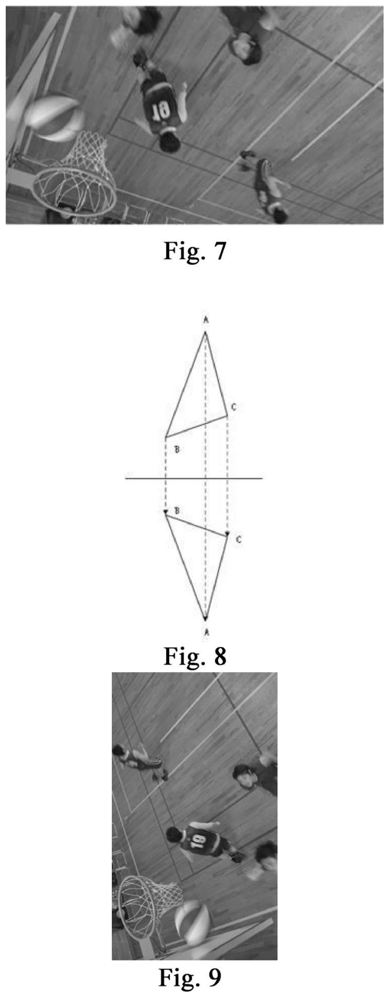

Optionally, if it is required to perform transformation processing on the video frame to be coded by means of at least one frame transformation mode, and the frame transformation mode is specifically vertical flip in geometric transformation, the video frame in Fig. 4 is flipped vertically to obtain a video frame as shown in Fig. 7. When vertical flip is performed, referring to Fig. 8, the pixel points A, B and C are flipped vertically.

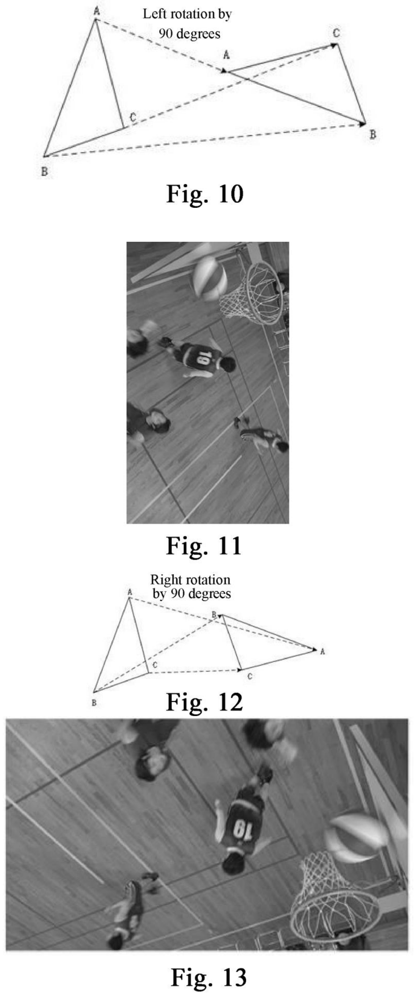

Optionally, if it is required to perform transformation processing on the video frame to be coded by means of at least one frame transformation mode, and the frame transformation mode is specifically left rotation by 90 degrees in geometric transformation (i.e., an image will be rotated 90 degrees to the left), the video frame in Fig. 4 is rotated 90 degrees to the left to obtain a video frame as shown in Fig. 9. When left rotation by 90 degrees is performed, referring to Fig. 10, pixel points A, B and C are rotated 90 degrees to the left.

Optionally, if it is required to perform transformation processing on a video frame to be coded by means of at least one frame transformation mode, and the frame transformation mode is specifically right rotation by 90 degrees in the geometric transformation (i.e., an image will be rotated 90 degrees to the right), the video frame in Fig. 4 is rotated 90 degrees to the right to obtain a video frame as shown in Fig. 11. When right rotation by 90 degrees is performed, referring to Fig. 12, pixel points A, B and C are rotated 90 degrees to the right.

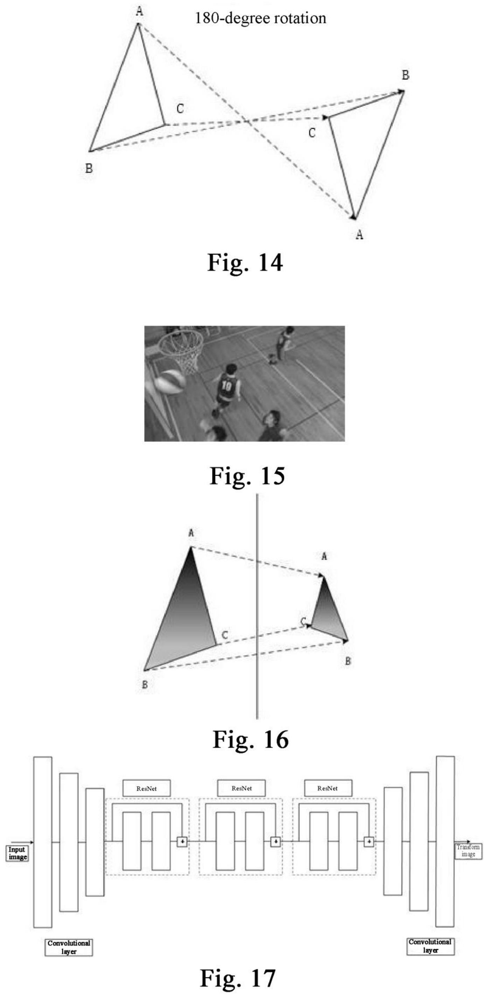

Optionally, if it is required to perform transformation processing on a video frame to be coded by means of at least one frame transformation mode, and the frame transformation mode is specifically 180-degree in the geometric transformation, the video frame in Fig. 4 is rotated 180 degrees to obtain a video frame as shown in Fig. 13. When 180-degree rotation is performed, referring to Fig. 14, pixel points A, B and C are rotated 180 degrees.

Optionally, if it is required to perform transformation processing on a video frame to be coded by means of at least one frame transformation mode, and the frame transformation mode is downsampling, downsampling (e.g., 1/2 downsampling) may be performed on the video frame in Fig. 4 to obtain the video frame as shown in Fig. 15, and at this time, the image size of the video frame is changed from 832×480 to 416×240. When downsampling is performed, referring to Fig. 16, pixel points A, B and C are downsampled. Optionally, upsampling is opposite from the downsampling.

Optionally, if it is required to perform transformation processing on a video frame to be coded by means of at least one frame transformation mode, and the frame transformation mode is non-linear transformation, for example, neural network-based transformation, referring to Fig. 17, the image is input into a neural network for model training, and the neural network outputs a transformed image. Optionally, the neural network may include a convolutional layer and a residual network ResNet. When the non-linear transformation is performed on the image, the video frame to be coded can be input into the neural network. Optionally, a three-layer Convolutional Neural Network (CNN) convolves the input image in sequence and outputs an intermediate image. The three-layer convolutional layer may have different sizes of convolution kernels, or may have the same size of convolution kernels and other parameters. The intermediate image is input into three Residual Neural Networks (ResNets), and the three ResNets can have the same or different parameters. Optionally, when the convolutional layers have different parameters, they may have a better transformation effect. In other words, they may achieve a better coding effect, i.e., the resulting image is more suitable for coding. The output result of the ResNet network is input into the three-layer convolutional layer to convolve the input image in sequence, and the final transformed image is then output. The three-layer convolutional layer may have different sizes of convolution kernels, or may have the same size of convolution kernels and other parameters.

Optionally, if it is required to perform transformation processing on a video frame to be coded by means of at least one frame transformation mode, and the frame transformation mode is linear transformation, assumed that the original input image is an input signal of YUV4:4:4 (i.e., each pixel is composed of three colors YUV in a ratio of 1:1:1), a manner of linear transformation can be expressed with the following formulae:

$$Y' = a_1 Y + b_1 U + c_1 V + d_1$$

$$U' = a_2 Y + b_2 U + c_2 V + d_2$$

$$V' = a_3 Y + b_3 U + c_3 V + d_3$$

That is, processing the image according to the linear transformation formula can also be implemented by performing inverse transform processing according to the formula. Details thereof are omitted herein for brevity. Optionally, YUV may refer to a luminance component image and two chrominance component images. $Y'$, $U'$ and $V'$ may be luminance component images and chrominance component images after frame transformation is performed. $a_1$, $a_2$, $a_3$, $b_1$, $b_2$, $b_3$, $c_1$, $c_2$, $c_3$ and $d_1$, $d_2$, $d_3$ may be constants.

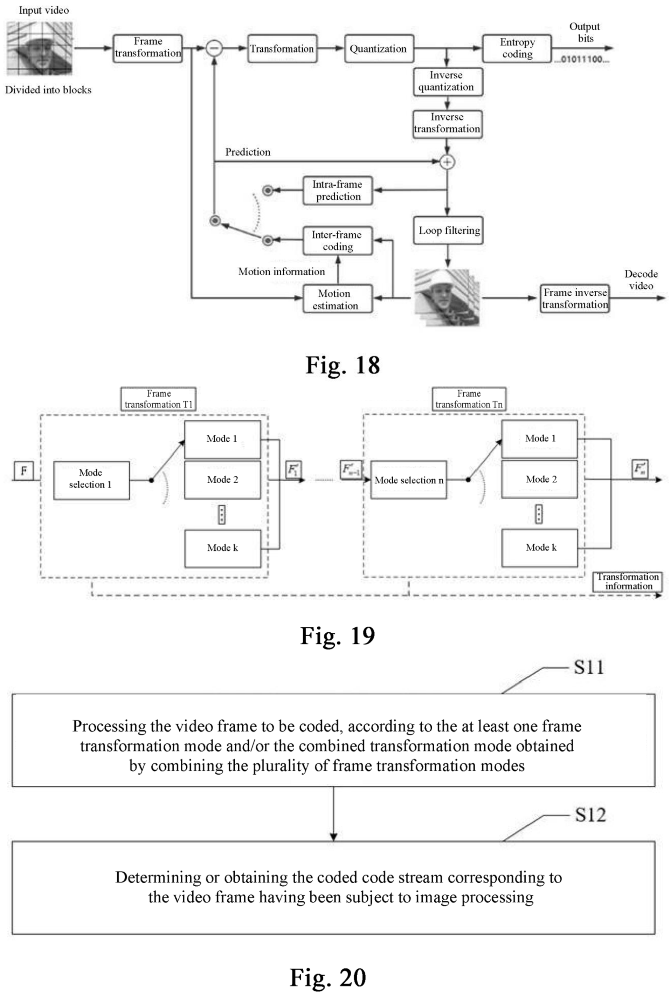

Optionally, referring to Fig. 18, the input video frame may be divided into blocks to obtain a plurality of pixel blocks; each pixel block is subject to frame transformation processing performed by a frame transformation module; the transformed video frame is input the subsequent "transformation," "quantization," "intra-frame prediction," "inter-frame coding," "inverse quantization," "inverse transformation," "loop filtering," and other modules; and the video frame processed by the quantization module is entropy-coded, and bits 01011100 are output. Motion estimation is performed based on the video frame having been subject to the loop filtering processing and the video frame having been subject to the frame transformation processing, to obtain motion information, and inter-frame prediction is performed based on the motion information. Optionally, at the coding end, the video frame is input into a "frame processing module." After executing a certain selection rule, this module performs one or more of geometric transformation, downsampling, linear transformation, non-linear transformation, and pre-filtering processing (in the case of filtering processing, there may be no mode information), and then outputs a transformed frame. The transformed frame is input into the subsequent "transformation," "quantization," "intra-frame prediction," "inter-frame coding," "inverse quantization," "inverse transformation," and other modules, to undergo inverse geometric transformation, upsampling, filtering processing, and the like, and a decoded image is output thereafter. Optionally, the loop filtering can be considered as a part of the frame inverse transformation module. Optionally, at the decoding end, a code stream is read, and transformation mode information is parsed (in the case of filtering, there may be no mode information); the video stream is subject to "inverse quantization," "inverse transformation," "inter-frame prediction," "intra-frame prediction," and the like, and a video frame (transformed at the coding end) is decoded; based on the mode information, the video frame is subject to "frame inverse transformation" which includes inverse geometric transformation, upsampling, filtering processing, and the like, and a decoded image is then output. Optionally, the loop filtering can be considered as a part of the frame inverse transformation module.

Optionally, a plurality of frame transformation modes are combined to obtain a combined transformation mode.

Optionally, the frame transformation mode may include at least one of geometric transformation, downsampling, upsampling, linear transformation, non-linear transformation, and filtering processing; optionally, the geometric transformation includes at least one of horizontal flip, vertical flip, 180-degree flip, left rotation by 90 degrees, right rotation by 90 degrees, and rotation by a preset angle; the non-linear transformation includes at least one of neural network transformation, high-order transformation, and deformation of a neural network; and the linear transformation includes an image processing mode based on a linear transformation formula. Therefore, the combined transformation mode obtained by combining a plurality of frame transformation modes includes a mode obtained by discretionarily combining at least two of geometric transformation, downsampling, upsampling, linear transformation, non-linear transformation and filtering processing. For example, the combined transformation mode may be horizontal flip, downsampling, or neural network transformation, or may be vertical flip or downsampling.

Optionally, the manner for acquiring or determining the frame transformation mode and/or the combined transformation mode obtained by combining the plurality of frame transformation modes, includes at least one of:

Manner 1: acquiring or determining at least one frame transformation mode and/or a combined transformation mode obtained by combining a plurality of frame transformation modes.

Optionally, prior to processing the video frame to be coded, the manner of the processing may be determined first. If the manner of the processing is performing image processing on the video frame to be coded by means of at least one frame transformation mode, the at least one frame transformation mode may be acquired or determined first. The manner of the acquiring or determining may include: selecting a required frame transformation mode, such as horizontal flip, downsampling, or the like, from a plurality of preset frame transformation modes; and acquiring or determining the selected frame transformation mode.

Optionally, prior to processing the video frame to be coded, the processing may be determined first. If the manner of the processing is performing image processing on the video frame to be coded by means of a set of, or a plurality of sets of, combined transformation modes, the set of, or the plurality of sets of, combined transformation modes may be constructed first. Constructing a combined transformation mode may include: first determining how many frame transformation modes need to be included in the combined transformation mode to be constructed, and choosing in the plurality of preset frame transformation modes; then, combining the selected frame transformation modes according to a preset combination order, to obtain the combined transformation mode. For example, if the combined transformation mode to be constructed is required to include downsampling, horizontal flip and linear transformation, the three frame transformation modes of downsampling, horizontal flip and linear transformation may be chosen from the plurality of preset frame transformation modes, and may be then combined in an arbitrary order or in a certain order, to obtain the combined transformation mode.

Optionally, prior to processing the video frame to be coded, the manner of the processing may be determined first. If the manner of the processing is performing image processing on the video frame to be coded jointly by using at least one transformation mode and a combined transformation mode obtained by combining a plurality of frame transformation modes, the frame transformation mode and the combined transformation mode are acquired or determined. Acquiring or determining the frame transformation mode may include choosing in a plurality of preset frame transformation modes. Acquiring or determining the combined transformation mode may include: first determining how many types of frame transformation modes are required to be included in the combined transformation mode to be constructed, and choosing in a plurality of preset frame transformation modes; then, combining multiple chosen frame transformation modes according to a preset combination order, to obtain the combined transformation mode.

Manner 2: acquiring or determining, according to a preset rule, at least one frame transformation mode and/or a combined transformation mode obtained by combining a plurality of frame transformation modes;

Manner 3: in a case that the video frame to be coded is a video frame of a specific format, acquiring or determining at least one frame transformation mode corresponding to the specific format and/or a combined transformation mode corresponding to the specific format;

Manner 4: in a case that a value of a specific type of signal in the video frame to be coded is greater than a preset signal value, acquiring or determining at least one frame transformation mode and/or a combined transformation mode obtained by combining a plurality of frame transformation modes, the at least one frame transformation mode and/or the combined transformation mode at least including non-linear transformation and/or filtering processing; or

Manner 5: in a case that a coding parameter corresponding to the video frame to be coded is less than a preset parameter value, and a resolution corresponding to the video frame to be coded is greater than or equal to a preset threshold, acquiring or determining at least one frame transformation mode and/or a combined transformation mode obtained by combining a plurality of frame transformation modes, the at least one frame transformation mode and/or the combined transformation mode at least including downsampling.

Optionally, the preset rule may be any rule set by users based on their own needs, for example, selecting a frame transformation mode having the optimal image processing effect. Prior to processing the video frame to be coded, the manner of the processing may be determined first. If the manner of the processing is performing imaging processing on the video frame to be coded by means of at least one frame transformation mode, the at least one frame transformation mode can be acquired or determined first from a plurality of preset frame transformation modes according to a preset rule. For example, a frame transformation mode having the optimal frame transformation effect is selected from the plurality of preset frame transformation modes.

Optionally, the preset rule may include at least one of: in a case that the video frame to be coded is a video frame of a specific format, acquiring or determining at least one frame transformation mode and/or a combined transformation mode corresponding to the specified format. For example, in the case of performing frame transformation processing on a video frame of a specific format, if the video frame is a 4K or 8K high-resolution video frame in the YUK format, downsampling may be performed on the video frame. The specific format may be a YUV format, a RGB format, or the like.

If a value of a specific type of signal in the video frame to be coded is greater than a preset signal value, at least one of non-linear transformation or filtering processing is acquired or determined, or a combined transformation mode and/or a frame transformation mode sequence that at least include at least one of linear transformation or filtering processing are acquired or determined. Optionally, the non-linear transformation may include neural network transformation. The specific type of signal may be a digital signal or an analog signal, or may be a luminance signal, a chrominance signal, or the like. The preset signal value may be a signal threshold set in advance.

In a case that a coding parameter corresponding to the video frame to be coded is less than a preset parameter value, and a resolution corresponding to the video frame to be coded is greater than or equal to a preset threshold, the frame transformation mode whose mode type is downsampling is acquired or determined, or a combined transformation mode and/or a frame transformation mode sequence that include downsampling are acquired or determined. The coding parameter may be a bit rate, or the like. The preset parameter value may be a parameter threshold set in advance. The preset threshold may be a resolution threshold set in advance.

For example, if it is required to perform n times of image processing (i.e., frame transformation) on the video frame to be coded, in the process of each frame transformation, there are k available image processing modes, wherein each image processing mode may be a simple or complex frame transformation mode, including, but not limited to, horizontal flip, vertical flip, 180-degree flip, left rotation by 90 degrees, right rotation by 90 degrees, downsampling, upsampling, linear transformation, non-linear transformation, and the like. In this embodiment, the image processing mode *per se* at least includes a frame transformation mode, i.e., the image processing mode may be a frame transformation mode, or may be a combined transformation mode obtained by arbitrarily combining a plurality of frame transformation modes. For example, as shown in Fig. 19, if it is required to perform image processing from frame transformation T1 to frame transformation Tn on a video frame F to be coded, during the frame transformation T1, a mode selection module 1 selects, based on the input video frame F, one or more modes from a mode 1, a mode 2, ..., a mode k according to a preset rule, to perform the frame transformation, and the output $F_1'$ is obtained, that is $F_1' = T_1(F)$. Likewise, a similar process is performed respectively for T2, ..., Tn. For example, if the video frame having been subject to the frame transformation processing $F_{n-1}'$ is input to a mode selection module n, the mode selection module n selects one or more modes from the mode 1, mode 2, ..., mode k according to the preset rule, to perform the frame transformation, and the output $F_n'$ is obtained.

Optionally, if it is required to perform image processing on the video frame to be coded by means of one or more sets of combined transformation modes obtained by combining a plurality of frame transformation modes, the plurality of sets of combined transformation modes may be constructed first, and one or more sets of combined transformation modes are then selected from the plurality of sets of pre-constructed combined transformation modes according to a preset rule, for use in image processing of the video frame to be coded. Moreover, when constructing a combined transformation mode, it is first determined how many types of frame transformation modes are required to be included in the combined transformation modes to be constructed, and choosing is performed on a plurality of preset frame transformation modes. Then, the plurality of frame transformation modes obtained by choosing are combined according to a preset combining sequence, to obtain a combined transformation mode. Alternatively, multiple frame transformation modes are directly selected from the plurality of preset frame transformation modes according to a present rule, and are then combined, to obtain a combined transformation mode.

Optionally, if it is required to perform image processing on the video frame to be coded by means of at least one frame transformation mode and a combined transformation mode obtained by combining multiple transformation modes, one or more frame transformation modes may be acquired or determined from a plurality of preset frame transformation modes based on a preset rule, or a set of combined transformation modes may be selected from a plurality sets of pre-constructed combined transformation modes based on a preset rule, or a part of frame transformation modes are selected from a plurality of preset frame transformation modes according to a preset rule, and then combined, to obtain a combined transformation mode.

Manner 6: acquiring or determining a frame transformation mode having the minimum rate distortion, and/or a combined transformation mode obtained by combining a plurality of frame transformation modes, which has the minimum rate distortion.

Optionally, prior to performing image processing on the video frame to be coded, a frame transformation mode having the minimum rate distortion may be acquired or determined from a plurality of preset frame transformation modes. In other words, by performing image processing on the video frame to be coded by means of the acquired or determined frame transformation mode, the effect of the minimum rate distortion can be accomplished. Optionally, prior to performing image processing on the video frame to be coded, a combined transformation mode having the minimum rate distortion can be acquired or determined from a combined transformation mode obtained by combining a plurality of frame transformation modes. Optionally, prior to performing image processing on the video frame to be coded, choosing is performed on the plurality of frame transformation modes and the combined transformation mode obtained by combining the plurality of frame transformation modes, to obtain a frame transformation mode having the minimum rate distortion, and/or a combined transformation mode having the minimum rate distortion.

Optionally, the at least one frame transformation mode includes a frame transformation mode and/or a frame transformation mode sequence.

Optionally, a frame transformation mode at each sequence position in the frame transformation mode sequence is acquired or determined according to a preset sequence rule corresponding to each sequence position;

optionally, constructing a frame transformation mode sequence may include: first determining how many sequence positions are included in the frame transformation mode sequence to be constructed, and choosing an appropriate frame transformation mode for each sequence position, to construct the frame transformation mode sequence. If the frame transformation mode sequence includes horizontal flip, downsampling and filtering processing, three sequence positions are included in the frame transformation mode sequence. When a frame transformation mode sequence is constructed, a preset sequence rule corresponding to each sequence position needs to be determined first, and a plurality of preset frame transformation modes are chosen according to the preset sequence rule, to obtain a frame transformation mode corresponding to the sequence position. The preset sequence rule corresponding to each sequence position may be the same, or may be different.

Optionally, when the choosing of the frame transformation mode is performed for each sequence position in the frame transformation mode sequence, an appropriate frame transformation mode may be synchronously or asynchronously chosen from the plurality of preset frame transformation modes according to the preset sequence rule corresponding to each sequence position.

Optionally, in a case that the at least one frame transformation mode includes frame transformation mode(s), the number of frame transformation modes is not limited herein.

Optionally, the preset sequence rule includes at least one of:

Manner 1: acquiring or determining a frame transformation mode having the minimum rate distortion;

Manner 2: in a case that the video frame to be coded is a video frame of a specific format, acquiring or determining a frame transformation mode corresponding to the specific format;

Manner 3: in a case that a value of a specific type of signal in the video frame to be coded is greater than a preset signal value, acquiring or determining a frame transformation mode whose mode type is at least one of non-linear transformation or filtering processing; or

Manner 4: in a case that the coding parameter corresponding to the video frame to be coded is less than a preset parameter value, and a resolution corresponding to the video frame to be coded is greater than or equal to a preset threshold, acquiring or determining a frame transformation mode whose mode type is downsampling.

Optionally, the preset sequence rule may not be limited to the preset sequence rule as described above, and users can adjust the preset sequence rule as actually required. Optionally, the specific format may be a YUV format, a RGB format, or another video frame format. The specific type of signal may be a digital signal, an analog signal, a luminance signal, a chrominance signal, or the like. The preset signal value may be a signal threshold set in advance. The coding parameter may include a bit rate. The preset parameter value may be a preset parameter threshold consistent with the coding parameter in terms of type. The preset threshold may be a resolution threshold set in advance.

For example, if three sequence positions are included in the frame transformation mode sequence to be constructed, a preset sequence rule corresponding to the second sequence position may include acquiring or determining a frame transformation mode having the minimum rate distortion (e.g., horizontal flip), and preset sequence rules corresponding to the first sequence position and the third sequence position are the same and include acquiring or determining the frame sampling mode whose mode type is downsampling in a case that a coding parameter corresponding to the video frame to be coded is less than the preset parameter value and a resolution corresponding to the video frame to be coded is greater than or equal to the preset threshold. If at the moment the coding parameter corresponding to the video frame to be coded is less than the preset parameter value and the corresponding resolution is greater than the preset threshold, the frame transformation mode on the first sequence position in the frame transformation mode sequence constructed at the moment is downsampling, the frame transformation mode on the second sequence position is horizontal flip, and the frame transformation mode on the third sequence position is downsampling.

In this embodiment, the coded code stream corresponding to the video frame to be coded is determined or obtained according to at least one frame transformation mode and/or a combined transformation mode obtained by combining a plurality of frame transformation modes. With the above technical solution, image processing can be performed on the video frame to be coded according to a frame transformation mode and/or a combined transformation mode, thereby implementing performing image processing by utilizing the asymmetry of the video signal prior to coding the video frame, to obtain the coding gain in the subsequent coding process and improve the coding performance of the video coding.

Second Embodiment

Refer to Fig. 20, which illustrates schematic diagram of a specific flowchart of the step S10 in the first embodiment of the processing method of the present disclosure. In this embodiment, on the basis of any one of the embodiments described above, the step S10 of the processing method may include steps of:

S11: processing the video frame to be coded according to the at least one frame transformation mode and/or the combined transformation mode obtained by combining the plurality of frame transformation modes;

optionally, when the video frame to be coded is processed, it is required to first determine how many processing the video frame needs to undergo, and how many frame transformations are needed during each processing. Then, a certain number of processing are performed on the video frame to be coded

according to the at least one frame transformation mode and/or the combined transformation mode obtained by combining the plurality of frame transformation modes.

Optionally, when the video frame to be coded is processed, a complete video frame to be coded can be processed according to the at least one frame transformation mode and/or the combined transformation mode obtained by combining the plurality of frame transformation modes. Alternatively, the video frame to be coded can further be divided into blocks to obtain respective image blocks, and then, one or more image blocks among the respective image blocks are processed according to the at least one frame transformation mode and/or the combined transformation mode obtained by combining the plurality of frame transformation modes. Alternatively, in the case that the video frame to be coded includes a plurality of segments, the video frame to be coded may further be divided into segments to obtain respective segments, and one or more segments are processed by means of the at least one frame transformation mode and/or the combined transformation mode obtained by combining the plurality of frame transformation modes. Alternatively, the video frame to be coded can further be first divided into zones to obtain respective zones, and then, one or more zones are processed according to the at least one frame transformation mode and/or the combined transformation mode obtained by combining the plurality of frame transformation modes. Alternatively, the video frame to be coded may be subject to one or more of block division processing, segment division processing, and zone division processing first, and processing is subsequently performed according to the at least one frame transformation mode and/or the combined transformation mode obtained by combining the plurality of frame transformation modes.

Optionally, the step S11 includes: performing at least one image processing on the video frame to be coded according to the at least one frame transformation mode and/or the combined transformation mode obtained by combining the plurality of frame transformation modes.

Optionally, after at least one frame transformation mode is obtained, one image processing may be performed on the video frame to be coded according to the at least one frame transformation mode acquired, or multiple image processing may be performed on the video frame to be coded according to the at least one frame transformation mode acquired, and, in a case that the multiple image processing are performed, the frame transformation mode for each image processing may be the same, or may be different.

Optionally, after one or more sets of combined transformation modes obtained by combining a plurality of frame transformation modes are acquired, one image processing or multiple image processing may be performed on the video frame to be coded according to the combined transformation modes, and, in a case that multiple image processing are performed, the combined transformation mode for each image processing may be the same, or may be different. For example, if it is required to perform three image processing on the video frame to be coded, a combined transformation mode A can be selected for the first image processing, a combined transformation mode B can be selected for the second image processing, and a combined transformation mode C can be selected for the third image processing. Optionally, the combined transformation mode A may include horizontal flip and downsampling, the combined transformation mode B may include neural network transformation, downsampling and linear transformation, and the combined transformation mode C may include downsampling, horizontal flip, and the like.

Optionally, after the at least one frame transformation mode and the combined transformation mode obtained by combining a plurality of frame transformation modes are acquired, one or more image processing can be performed on the video frame to be coded according to the at least one frame transformation mode and the combined transformation mode, and, in a case that multiple processing are performed, when each processing is performed, the same frame transformation mode and/or combined transformation mode may be selected, or different frame transformation modes and/or combined transformation modes may be selected. Optionally, when the image processing is performed on the video frame, the video frame may be divided into a plurality of pixel blocks, and image processing may be then performed on each pixel block; or image processing may be performed directly on the video frame.

Optionally, in the case that it is required to perform image processing on the video frame to be coded according to at least one frame transformation mode, if the at least one frame transformation mode includes a frame transformation mode, the image processing is performed on the video frame to be coded directly according to the frame transformation mode. If at least one frame transformation mode includes a frame transformation mode sequence, image processing is performed on the video frame to be coded in sequence according to the frame transformation mode on each sequence position in the frame transformation mode sequence.

Optionally, performing at least one image processing on the video frame to be coded according to the combined transformation mode obtained by combining the plurality of frame transformation modes includes: determining all frame transformation modes included in the combined transformation mode obtained by combining the plurality of frame transformation modes, and performing simultaneously at least one image processing on the video frame to be coded according to all the frame transformation modes included in the combined transformation mode.

Optionally, when at least one image processing is performed on the video frame to be coded according to the combined transformation mode, at least one image processing can be performed simultaneously on the video frame to be coded according to all the frame transformation modes included in the combined transformation mode. For example, if the combined transformation mode includes downsampling and horizontal flip, when image processing is performed on the video frame to be coded, downsampling and horizontal flip may be performed simultaneously, or at least one image processing may be performed asynchronously (or, non-simultaneously) on the video frame to be coded according to all the frame transformation modes included in the combined transformation mode.

Optionally, the step S11 includes:

Manner 1: performing one image processing on the video frame to be coded, according to the at least one frame transformation mode and/or the combined transformation mode obtained by combining the plurality of frame transformation modes;

optionally, when one image processing is performed on the video frame to be coded, a frame transformation mode may be selected to perform one image processing on the video frame to be coded. A frame transformation mode sequence may also be selected to perform one image processing on the video frame to be coded. A combined transformation mode may also be selected to perform one image processing on the video frame to be coded. A plurality of combined transformation modes may also be selected to perform one image processing on the video frame to be coded. At least one frame transformation mode and at least one combined transformation mode may also be selected to perform one image processing on the video frame to be coded.

Optionally, when one image processing is performed on the video frame to be coded, if a plurality of frame transformation modes are involved, a plurality of combined transformation modes are involved, or at least one transformation mode and a combined transformation mode are involved, a transformation sequence can be set first, and an appropriate frame transformation mode or combined transformation mode can be selected according to the transformation sequence, to perform one image processing on the video frame to be coded.

Manner 2: performing image processing on the video frame to be coded in sequence, according to at least one frame transformation mode which is selected each time, and/or a combined transformation mode obtained by combining a plurality of frame transformation modes, which is selected each time.

Optionally, if it is required to perform multiple image processing on the video frame to be coded, the frame transformation mode and/or combined transformation mode selected each time for performing image processing on the video frame to be coded can be determined, and the image processing is then performed on the video frame to be coded according to the frame transformation mode selected each time and/or combined transformation mode selected each time.

Optionally, if multiple image processing all are performed by means of a frame transformation mode sequence, image processing (e.g., frame transformation) can be performed on the video frame to be coded in sequence according to a frame transformation mode on each sequence position in the frame transformation mode sequence.

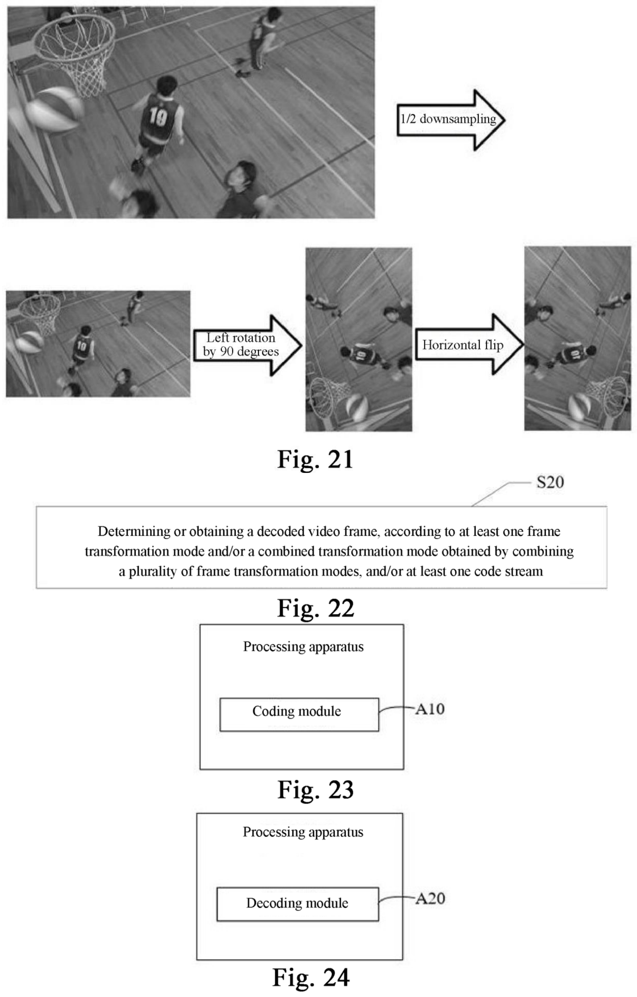

Optionally, if multiple image processing all are performed by means of a frame transformation mode, an image processing sequence of the multiple image processing can be determined, and an appropriate frame transformation mode can be selected in sequence according to the image processing sequence, to perform image processing on the video frame to be coded. For example, as shown in Fig. 21, three image processing can be performed on the video frame to be coded, and the frame transformation mode selected each time is different. For example, the first selection is 1/2 downsampling, the second selection is left rotation by 90 degrees, and the third selection is horizontal flip.

Optionally, if the multiple image processing all are performed by means of a combined transformation mode, a preset image processing sequence can be determined, and image processing are performed on the video frame to be coded according to the combined transformation modes selected in the image processing sequence.

Optionally, in a case that multiple image processing are performed on the video frame to be coded, if the multiple image processing include performing image processing by means of a frame transformation mode and performing image processing by means of a combined transformation mode, a preset image processing sequence may be determined, and the image processing are performed on the video frame to be coded according to the frame transformation mode and/or combined transformation mode selected in the image processing sequence. For example, if three image processing are performed on the video frame to be coded, the first selection may be a frame transformation mode, the second selection may be a combined transformation mode obtained by combining a plurality of frame transformation modes, and the third selection may be a frame transformation mode. Optionally, the number and the type of the frame transformation modes and/or combined transformation modes selected each time are not limited herein.

Optionally, if multiple image processing are performed on the video frame to be coded, image processing may be performed on the video frame to be code in the image processing sequence according to a frame transformation mode, and/or a frame transformation mode sequence, and/or a combined transformation mode.

S12: determining or obtaining the coded code stream corresponding to the video frame having been subject to image processing.

Optionally, after the image processing is performed on the video frame, the video frame having been subject to image processing may be coded, or the video frame having been subject to image processing may be coded together along with the frame transformation mode and/or the combined transformation mode corresponding to the image processing, to determine or obtain the coded code stream corresponding to the video frame having been subject to image processing. The coded code stream can be sent to a decoding end according to a preset protocol rule.

Optionally, the step S12 includes at least one of:

Manner 1: coding the video frame having been subject to the image processing, to determine or obtain the coded code stream;

optionally, after the video frame having been subject to the image processing is acquired, the video frame having been subject to the image processing may be coded according to the preset protocol rule, to determine or obtain a coded code stream, and the coded code stream is sent to the decoding end. Moreover, when being sent to the decoding end, the frame transformation mode corresponding to the image processing and/or the combined transformation mode corresponding to the image processing may be sent, together with the coded code stream, to the decoding end.

Manner 2: coding the video frame having been subject to the image processing, and the at least one frame transformation mode and/or the combined transformation mode, to determine or obtain the coded code stream;

optionally, after the video frame having been subjected to the image processing is acquired, the video frame having been subjected to the image processing, and the at least one frame transformation mode (e.g. the frame transformation mode and/or the frame transformation mode sequence) and/or the combined transformation mode are coded according to the preset protocol rule, to determine or obtain a coded code stream, and the coded code stream is sent to the decoding end. Moreover, in a case that multiple image processing are performed on the video frame having been subject to the image processing, a part of the frame transformation modes and/or the combined transformation modes may be selected and coded together with the coded code stream, to determine or obtain a coded code stream. All the frame transformation modes and/or the combined transformation modes may also be selected and coded together with the coded code stream, to determine or obtain a coded code stream. Moreover, in the case that a part of the frame transformation modes and/or the combined transformation modes is selected and coded together with the coded code stream, a part of all the frame transformation modes and/or the combined transformation modes for image processing performed on the video frame are selected, so as to be subsequently coded together with the coded code stream.

Manner 3: coding the video frame having been subject to the image processing, and the at least one frame transformation mode and/or the combined transformation mode corresponding to each image processing, to determine or obtain the coded code stream;

optionally, after the video frame having been subject to the image processing is acquired, the video frame having been subject to the image processing, and the at least one frame transformation mode and/or the combined transformation mode corresponding to each image processing are coded, to determine or obtain a coded code stream, and the coded code stream is sent to the decoding end. For example, when image processing is performed on the video frame, the video frame may be first horizontally flipped and then downsampled, to obtain the video frame having been subject to image processing, and thereafter, the downsampling, the horizontal flip, and the video frame having been subject to the image processing are coded together, to determine or obtain a coded code stream.

Manner 4: coding the video frame having been subject to the image processing, the at least one frame transformation mode and/or the combined transformation mode corresponding to each image processing, and an image processing sequence corresponding to the image processing, to determine or obtain the coded code stream.

Optionally, after the video frame having been subject to the image processing is acquired, if the video frame are subject to multiple image processing, the at least one frame transformation mode and/or the combined transformation mode for each image processing, as well as a sequence according to which the image processing is processed on the video frame, and which is an image processing sequence need to be acquired; the video frame having been subject to the image processing, the at least one frame transformation mode and/or the combined transformation mode corresponding to each image processing, and the image processing sequence are coded, to determine or obtain a coded code stream; subsequently, the coded code stream is sent to the decoding end.

In this embodiment, the video frame to be coded is processed according to at least one frame transformation mode and/or a combined transformation mode, and a coded code stream corresponding to the video frame having been subject to the image processing is determined and obtained. In the way, the coding performance of the video coding can be improved by utilizing the asymmetry of the video frame according to image processing.

Third Embodiment

Refer to Fig. 22, which illustrates a schematic diagram of the flowchart of the third embodiment of the processing method of the present disclosure. In the embodiment, the processing method according to the present disclosure can be applied to a processing device (e.g., a server or a smart terminal), and includes the following steps:
S20: determining or obtaining a decoded video frame, according to at least one frame transformation mode and/or a combined transformation mode obtained by combining a plurality of frame transformation modes and/or at least one code stream.

Optionally, in the case that the processing device is a decoding end, upon a code stream, for example, a coded code stream sent by a coding end, is received, the processing device may process the code stream, to determine or obtain a decoded video frame. For example, the processing device decodes the code stream, to obtain a decoded video frame. Or, the processing device decodes the code stream and then performs frame transformation, to obtain a decoded video frame.

Optionally, when the processing device have received at least one frame transformation mode and/or a combined transformation mode obtained by combining a plurality of frame transformation modes, for example, at least one frame transformation mode and/or a combined transformation mode sent by the coding end, the processing device may acquire a decoded video frame corresponding to the at least one frame transformation mode and/or the combined transformation mode. For example, the processing device may download the decoded video frame corresponding to the at least one frame transformation mode and/or the combined transformation mode from a third-party device. Or, the processing device may decode a code stream stored therein according to the at least one frame transformation mode and/or the combined transformation mode, to determine or obtain a decoded video frame. Or, the processing device may retrieve a decoded video frame corresponding to the at least one frame transformation mode and/or the combined transformation mode from all decoded video frames according to the at least one frame transformation mode and/or the combined transformation mode.

Optionally, when the processing device have received at least one frame transformation mode and/or a combined transformation mode, and at least one code stream, the processing device may decode the code stream and perform image processing on the decoded data according to the at least one frame transformation mode and/or the combined transformation mode, to determine or obtain a decoded video frame.

Optionally, the frame transformation mode may include at least one of geometric transformation, downsampling, upsampling, linear transformation, non-linear transformation, and filtering processing. Optionally, the geographic transformation includes at least one of horizontal flip, vertical flip, 180-degree flip, left rotation by 90 degrees, right rotation by 90 degrees, and rotation by a preset angle; the non-linear transformation includes at least one of neural network transformation, high-order transformation, and deformation of a neural network; and the linear transformation includes an image processing mode based on a linear transformation formula.

It is noted that the frame transformation mode in the embodiment is not limited to the geometric transformation, downsampling, upsampling, linear transformation, non-linear transformation, and the like, as mentioned above, which are only provided herein as examples for illustration.

Optionally, because the frame transformation mode may include at least one of geometric transformation, downsampling, upsampling, linear transformation, non-linear transformation, and the like; optionally, the geographic transformation includes at least one of horizontal flip, vertical flip, 180-degree flip, left rotation by 90 degrees, right rotation by 90 degrees, and rotation by a preset angle; the non-linear transformation includes at least one of neural network transformation, high-order transformation, and deformation of a neural network; and the linear transformation includes an image processing mode based on a linear transformation formula, a combined transformation mode obtained by combining a plurality of frame transformation modes may include a mode obtained by arbitrarily combining at least two of geometric transformation, downsampling, upsampling, linear transformation, non-linear transformation and filtering processing. For example, a combined transformation mode may include horizontal flip, downsampling and neural network transformation, or may be a vertical flip, downsampling and the like.

In the embodiment, a decoded video frame is determined or obtained according to at least one frame transformation mode and/or a combined transformation mode obtained by combining a plurality of frame transformation modes and/or at least one code stream. In this way, the performance of decoding the video frame can be improved according to at least one frame transformation mode and/or a combined transformation mode.

Fourth Embodiment

In the embodiment, according to any one of the first through third embodiments, the at least one frame transformation mode includes a frame transformation mode and/or a frame transformation mode sequence. In addition or alternatively, the processing method according to the present disclosure may include at least one of the following processing manners:

Processing Manner 1: decoding the code stream, to determine or obtain a video frame having been subject to image processing and/or the at least one frame transformation mode and/or the combined transformation mode obtained by combining the plurality of frame transformation modes;

optionally, after the code stream is acquired, the code stream can be decoded according to a protocol, to determine or obtain a video frame having been subject to image processing and/or at least one frame transformation mode and/or a combined transformation mode obtained by combining a plurality of frame transformation modes. Moreover, after the video frame having been subject to image processing is obtained, image processing (e.g., frame inverse transform) may be performed on the video frame according to the frame transformation mode, and/or the frame transformation mode sequence, and/or the combined frame transformation, to recover and obtain the decoded video frame. For example, if the coding end undergoes image processing of 1/2 downsampling, left rotation by 90 degrees and horizontal flip respectively, to obtain a video frame having been subject to image processing, and the video frame having been subject to image processing is coded and sent to the decoding end. The decoding end finds, in performing decoding, the presence of the frame transformation mode including 1/2 downsampling, left rotation by 90 degrees and horizontal flip, as well as the video frame having been subject to image processing. At this time, the decoding end can perform image processing (i.e., frame recovery) on the video frame having been subject to image processing by means of horizontal flip, left rotation by 90 degrees and 2x upsampling, to obtain a decoded video frame.

Processing Manner 2: decoding the code stream, to determine or obtain a video frame having been subject to image processing, an image processing sequence, and the at least one frame transformation mode and/or the combined transformation mode obtained by combining the plurality of frame transformation modes.

Optionally, after the code stream is acquired, the code stream can be decoded according to a protocol, to determine or obtain a video frame having been subject to image processing, at least one frame transformation mode and/or a combined transformation mode obtained by combining a plurality of frame transformation modes, and an image processing sequence. Furthermore, an inverse sequence corresponding to the image processing sequence may be determined after the video frame having been subject to image processing is obtained. For example, if the image processing sequence is ABC, the inverse sequence corresponding to the image processing sequence is CBA. Thereafter, image processing can be performed on the video frame having been subject to image processing again, according to the inverse sequence corresponding to the image processing sequence, as well as the frame transformation mode, and/or the frame transformation mode sequence, and/or the combined transformation mode, to determine or obtain a decoded video frame. Alternatively, image processing may be performed on the video frame having been subject to image processing again directly according to the image processing sequence, as well as the frame transformation mode, and/or the frame transformation mode sequence, and/or the combined transformation mode, to determine or obtain a decode video frame.

In the embodiment, by decoding the code stream, a video frame having been subjected to image processing and/or a frame transformation mode, and/or a frame transformation mode sequence, and/or a combined transformation mode are obtained, or an image processing sequence may also be obtained. In this way, it can be guaranteed that the decoding end can obtain at least one video frame.

Fifth Embodiment

In the embodiment, on the basis of any one of the embodiments described above, the step S20 of the processing method may include the following manners:

Manner 1: taking the video frame having been subject to image processing as the decoded video frame;

optionally, the code stream is decoded to obtain a video frame having been subject to image processing, and this video frame is directly taken as a decoded video frame.

Manner 2: performing inverse processing on the video frame having been subject to image processing according to the at least one frame transformation mode and/or the combined transformation mode obtained by combining the plurality of frame transformation modes, to obtain the decoded video frame;

optionally, in the case of decoding the code stream and finding that there are at least one frame transformation mode and/or a combined transformation mode obtained by combining a plurality of frame transformation modes, as well as a video frame having been subject to image processing, inverse processing can be performed on the video frame having been subject to image processing, by means of the frame transformation mode, and/or the frame transformation mode sequence, and/or the combined transformation mode. For example, if downsampling is obtained after decoding, the inverse processing may be recovering the video frame having been subject to image processing through upsampling, to obtain a decoded video frame. In addition, a part of the at least one frame transformation mode and/or the combined transformation mode obtained by combining a plurality of frame transformation modes, which are obtained after decoding, may be selected to perform inverse processing on the video frame having been subject to image processing, to obtain a decoded video frame. For example, if the coding end performs image processing on the video frame through horizontal flip and downsampling, the decoding end can select at least one of the horizontal flip and upsampling to perform recovering when recovering the video frame having been subject to image processing. The video frame having been subject to image processing which is obtained after decoding may also be directly taken as a decoded video frame.

Optionally, performing inverse processing on the video frame having been subject to image processing according to the frame transformation mode, and/or the frame transformation mode sequence, and/or the combined transformation mode may include: performing the inverse processing on one or more image blocks in the video frame having been subject to image processing by means of the frame transformation mode, and/or the frame transformation mode sequence, and/or the combined transformation mode; or performing the inverse processing on one or more zones in the video frame having been subject to image processing by means of the frame transformation mode, and/or the frame transformation mode sequence, and/or the combined transformation mode; or performing the inverse processing on one or more segments in the video frame having been subject to image processing by means of the frame transformation mode, and/or the frame transformation mode sequence, and/or the combined transformation mode; or performing the inverse processing on a segment and/or a zone and/or an image block in the video frame having been subject to image processing by means of the frame transformation mode, and/or the frame transformation mode sequence, and/or the combined transformation mode.

Manner 3: performing inverse processing on the video frame having been subject to image processing, according to the at least one frame transformation mode and/or the combined transformation mode obtained by combining the plurality of frame transformation modes, as well as the image processing sequence, to obtain the decoded video frame.

Optionally, in the case of decoding the code stream and finding that there are at least one frame transformation mode and/or a combined transformation mode obtained by combining a plurality of frame transformation modes, an image processing sequence, as well as a video frame having been subject to image processing, inverse processing can be performed on the video frame having been subject to image processing according to an inverse sequence corresponding to the image processing sequence, by means of the frame transformation mode, and/or the frame transformation mode sequence, and/or the combined transformation mode. Optionally, the inverse processing may be recovering the video frame having been subject to image processing. For example, if the image processing sequence is first left rotation by 90 degrees, and then downsampling, the process of performing inverse processing on the video frame having been subject to image processing may be first upsampling, and then right rotation by 90 degrees. The video frame having been subject to inverse processing is taken as a decode video frame. Optionally, when performing the inverse processing on the video frame having been subject to image processing according to the inverse sequence corresponding to the image processing sequence, by means of the frame transformation mode, and/or the frame transformation mode sequence, and/or the combined transformation mode, inverse processing may likewise be performed on a segment and/or a zone and/or an image block in the video frame having been subject to image processing.

In the embodiment, the video frame having been subject to image processing is taken as a decoded video frame; or inverse processing is performed according to a frame transformation mode, and/or a frame transformation mode sequence, and/or a combined transformation mode, to obtain a decoded video frame; or inverse processing is performed according to a frame transformation mode, and/or a frame transformation mode sequence, and/or a combined transformation mode, and an image processing sequence, to obtain a decoded video frame. The validity of the decoded video frame obtained can thus be guaranteed.

The embodiments of the present disclosure also provide a processing apparatus. Refer to Fig. 23, which illustrates a schematic diagram of a functional module of the processing apparatus according to the present disclosure, which may be disposed in the processing device, or may be the processing device *per se.* The processing apparatus according to the present disclosure includes:

a coding module A10 configured for determining or obtaining a coded code stream corresponding to a video frame to be coded, according to at least one frame transformation mode and/or a combined transformation mode obtained by combining a plurality of frame transformation modes.

Optionally, acquiring or determining the frame transformation mode and/or the combined transformation mode obtained by combining the plurality of frame transformation modes, includes at least one of:

acquiring or determining at least one frame transformation mode and/or a combined transformation mode obtained by combining a plurality of frame transformation modes;

acquiring or determining, according to a preset rule, at least one frame transformation mode and/or a combined transformation mode obtained by combining a plurality of frame transformation modes;

in a case that the video frame to be coded is a video frame of a specific format, acquiring or determining at least one frame transformation mode corresponding to the specific format and/or a combined transformation mode corresponding to the specific format;

in a case that a value of a specific type of signal in the video frame to be coded is greater than a preset signal value, acquiring or determining at least one frame transformation mode which at least includes non-linear transformation and/or filtering processing, and/or a combined transformation mode obtained by combining a plurality of frame transformation modes, which at least comprises non-linear transformation and/or filtering processing;

in a case that a coding parameter corresponding to the video frame to be coded is less than a preset parameter value, and a resolution corresponding to the video frame to be coded is greater than or equal to a preset threshold, acquiring or determining at least one frame transformation mode which at least includes downsampling, and/or a combined transformation mode obtained by combining a plurality of frame transformation modes, which at least comprises downsampling; or

acquiring or determining a frame transformation mode having a minimum rate distortion, and/or a combined transformation mode obtained by combining a plurality of frame transformation modes, which has a minimum rate distortion.

Optionally, the at least one frame transformation mode includes a frame transformation mode and/or a frame transformation mode sequence.

Optionally, a frame transformation mode on each sequence position in the frame transformation mode sequence is acquired or determined according to a preset sequence rule corresponding to each sequence position.

Optionally, the preset sequence rule includes at least one of:

acquiring or determining a frame transformation mode having the minimum rate distortion;

in a case that the video frame to be coded is a video frame of a specific format, acquiring or determining a frame transformation mode corresponding to the specific format;

in a case that a value of a specific type of signal in the video frame to be coded is greater than a preset signal value, acquiring or determining the frame transformation mode whose mode type is at least one of non-linear transformation or filtering processing; or

in a case that the coding parameter corresponding to the video frame to be coded is less than a preset parameter value, and a resolution corresponding to the video frame to be coded is greater than or equal to a preset threshold, acquiring or determining the frame transformation mode whose mode type is downsampling.

Optionally, the coding module A10 is further configured for:

processing the video frame to be coded, according to the at least one frame transformation mode and/or the combined transformation mode obtained by combining the plurality of frame transformation modes; and

determining or obtaining the coded code stream corresponding to the video frame having been subject to image processing.

Optionally, the coding module A10 is further configured for:
performing at least one image processing on the video frame to be coded, according to the at least one frame transformation mode and/or the combined transformation mode obtained by combining the plurality of frame transformation modes.

Optionally, performing at least one image processing on the video frame to be coded according to the combined transformation mode obtained by combining the plurality of frame transformation modes, includes: determining all frame transformation modes included in the combined transformation mode obtained by combining the plurality of frame transformation modes, and performing simultaneously at least one image processing on the video frame to be coded according to all the frame transformation modes included in the combined transformation mode.

Optionally, the coding module A10 is further configured for:

performing one image processing on the video frame to be coded, according to the at least one frame transformation mode and/or the combined transformation mode obtained by combining the plurality of frame transformation modes; or

performing image processing on the video frame to be coded in sequence according to at least one frame transformation mode which is selected each time, and/or a combined transformation mode obtained by combining a plurality of frame transformation modes, which is selected each time.

Optionally, the coding module A10 is also configured for:

coding the video frame having been subject to image processing, to determine or obtain the coded code stream;

coding the video frame having been subject to image processing, and the at least one frame transformation mode and/or the combined transformation mode, to determine or obtain the coded code stream;

coding the video frame having been subject to image processing, and the at least one frame transformation mode and/or the combined transformation mode corresponding to each image processing, to determine or obtain the coded code stream; or

coding the video frame having been subject to image processing, the at least one frame transformation mode and/or the combined transformation mode corresponding to each image processing, and an image processing sequence corresponding to the image processing, to determine or obtain the coded code stream.

The present disclosure further provides a processing apparatus. Referring to Fig. 24, the processing apparatus according to the present disclosure includes: a decoding module A20 configured for determining or obtaining a decoded video frame, according to at least one frame transformation mode and/or a combined transformation mode obtained by combining a plurality of frame transformation modes and/or at least one code stream.

Optionally, the at least one frame transformation mode includes a frame transformation mode and/or a frame transformation mode sequence.

Optionally, the decoding module 20 is further configured for at least one of:

decoding the code stream, to determine or obtain a video frame having been subject to image processing, and/or the at least one frame transformation mode and/or the combined transformation mode obtained by combining the plurality of frame transformation modes; or

decoding the code stream, to determine or obtain a video frame having been subject to image processing, an image processing sequence, and/or the at least one frame transformation mode and/or the combined transformation mode obtained by combining the plurality of frame transformation modes.

Optionally, the decoding module A20 is further configured for at least one of:

taking the video frame having been subject to image processing as the decoded video frame;

performing inverse processing on the video frame having been subject to image processing, according to the at least one frame transformation mode and/or the combined transformation mode obtained by combining the plurality of frame transformation modes, to obtain the decoded video frame; or

performing inverse processing on the video frame having been subject to image processing, according to the at least one frame transformation mode and/or the combined transformation mode obtained by combining the plurality of frame transformation modes, as well as the image processing sequence, to obtain the decoded video frame.

Optionally, the functional implementations of the respective modules in the above processing apparatus correspond to the respective steps in the processing method embodiments as described above, and details of the functions and the implementation process thereof are omitted herein for brevity.

The embodiments of the present disclosure further provide a processing device, including a memory and a processor, wherein the memory has a processing program thereon, which, when executed by the processor, implements steps of the processing method according to any one of the embodiments described above.

The embodiments of the present disclosure further provide a storage medium, wherein the storage medium has a processing program stored thereon, which, when executed by the processor, implements steps of the processing method according to any one of the embodiments described above.

In the embodiments of the image processing device and the storage medium provided by the present disclosure may include all the technical features of any one of the processing method embodiments described above, and the expansion and explanation in the specification are substantially the same as those in the respective embodiments of the methods describe above. Details thereof are omitted herein.

The embodiments of the present disclosure further provide a computer program product, wherein the computer program product includes computer program code that, when running on a computer, causes the computer to perform the method according to various possible implementations described above.

The embodiments of the present disclosure further provide a chip, including a memory and a processor, wherein the memory is configured to store a computer program, and the processor is configured to call the computer program from the memory and run the same, to enable a device having the chip installed thereon to perform the method according to various possible implementations described above.

It would be appreciated that the scenarios described above are provided only as examples, and do not constitute a limitation to the application scenario of the technical solution provided by the embodiments of the present disclosure. The technical solution of the present disclosure can also be applied to other scenarios. For example, as will be appreciated by those skilled in the art, with the evolution of the system architecture and the emergence of new service scenarios, the technical solution provided by the embodiments of the present disclosure can also be applied to solve similar technical problems.

The serial numbers of the embodiments of the present disclosure are provided only for description, without indicating a superiority order of the embodiments.

The steps in the method according to the embodiments of the present disclosure may be adjusted in sequence, merged or deleted as actually required.

The units in the device according to the embodiments of the present disclosures may be merged, divided or deleted as actually required.

In the present disclosure, the same or similar terminology, technical solution and/or application scenario are only described in detail when mentioned the first time, and omitted for brevity if used in the following parts. For ease of understanding the technical solution and other content described herein, reference could be made to the previous related details for the same or similar terminology, technical solution and/or application scenario.

The present disclosure places different emphases on the various embodiments, and reference therefore could be made to related description of other embodiments for a part not detailed or recited in a certain embodiment.

The various technical features of the technical solution of the present disclosure could be combined arbitrarily. For brevity of description, not all possible combinations of the technical features in the above embodiments are described herein. Nevertheless, as long as no contradiction is generated in a combination of those technical features, such combination should be considered as falling into the scope of disclosure contained in the present disclosure.

Through the foregoing description of the implementations, those skilled in the art could fully learn that the method according to the embodiments could be implemented by means of software and necessary general hardware platforms, or may be implemented by means of hardware. However, in many cases, the former is a better approach. On the basis of this understanding, the substance, or the part making contribution over the prior art, of the technical solution of the present disclosure could be embodied in the form of a software product, where the computer software product is stored in the storage medium described above (e.g., an ROM/RAM, a magnetic disk, or a CD), and includes a plurality of instructions for causing a terminal device (which may be a mobile phone, a computer, a server, a controlled terminal, a network device, or the like) to perform the method according to each embodiment of the present disclosure.

All or a part of the embodiments described above could be implemented by software, hardware, firmware, or any combination thereof. If they are implemented by software, all or a part thereof could be implemented in the form of a computer program product. The computer program product includes one or more computer instructions. When the computer program instructions are loaded and executed on the computer, the flows or functions according to the embodiments of the present disclosure could be generated in whole or in part. The computer may be a general-purpose computer, a special-purpose computer, a computer network, or other programmable device. The computer instructions can be stored in a computer readable storage medium, or can be transmitted from a computer readable storage medium to a further computer readable storage medium, for example, from a website, computer, server or data center to a further website, computer, server or data center in a wired (e.g., a coaxial cable, optical fiber, or digital subscriber line) or a wireless (e.g., infrared, radio, microwave, or the like) manner. The computer readable storage medium may be any available medium that can be accessed by a computer, or a data storage device such as a server, a data center, or the like, that has one or more available media integrated therein. The available medium may be a magnetic medium (e.g., a floppy disk, a storage disk, a magnetic tape), an optical medium (e.g., a DVD), a semiconductor medium (e.g., a Solid State Disk (SSD), or the like.

The above are only preferred embodiments of the present disclosure, without suggesting any limitation to the scope of the present disclosure. Any equivalent structure or equivalent process variation made based on the content of the specification and the drawings of the present disclosure, or directly or indirectly applicable to other related technical fields, should all fall within the scope of protection of the present disclosure.

**Claims**

1.  A processing method, comprising a step of:
    S10: determining or obtaining a coded code stream corresponding to a video frame to be coded, according to at least one frame transformation mode and/or a combined transformation mode obtained by combining a plurality of frame transformation modes.

2.  The method of claim 1, wherein the at least one frame transformation mode comprises a frame transformation mode and/or a frame transformation mode sequence; and/or acquiring or determining the frame transformation mode and/or the combined transformation mode obtained by combining the plurality of frame transformation modes comprises at least one of:

        acquiring or determining at least one frame transformation mode and/or a combined transformation mode obtained by combining a plurality of frame transformation modes;

acquiring or determining, according to a preset rule, at least one frame transformation mode and/or a combined transformation mode obtained by combining a plurality of frame transformation modes;

in a case that the video frame to be coded is a video frame of a specific format, acquiring or determining at least one frame transformation mode corresponding to the specific format and/or a combined transformation mode corresponding to the specific format;

in a case that a value of a specific type of signal in the video frame to be coded is greater than a preset signal value, acquiring or determining at least one frame transformation mode which at least comprises non-linear transformation and/or filtering processing, and/or a combined transformation mode obtained by combining a plurality of frame transformation modes, which at least comprises non-linear transformation and/or filtering processing;

in a case that a coding parameter corresponding to the video frame to be coded is less than a preset parameter value, and a resolution corresponding to the video frame to be coded is greater than or equal to a preset threshold, acquiring or determining at least one frame transformation mode which at least comprises downsampling, and/or a combined transformation mode obtained by combining a plurality of frame transformation modes, which at least comprises downsampling; or

acquiring or determining a frame transformation mode having a minimum rate distortion, and/or a combined transformation mode obtained by combining a plurality of frame transformation modes, which has a minimum rate distortion.

3. The method of claim 1 or 2, wherein the step S10 comprises steps of:

S11: processing the video frame to be coded according to the at least one frame transformation mode and/or the combined transformation mode obtained by combining the plurality of frame transformation modes; and

S12: determining or obtaining the coded code stream corresponding to the video frame having been subject to image processing.

4. The method of claim 3, wherein the step S11 comprises at least one of:

performing at least one image processing on the video frame to be coded according to the at least one frame transformation mode and/or the combined transformation mode obtained by combining the plurality of frame transformation modes; or

performing image processing on the video frame to be coded in sequence according to at least one frame transformation mode which is selected each time, and/or a combined transformation mode obtained by combining a plurality of frame transformation modes, which is selected each time.

5. The method of claim 3, wherein the step S12 comprises at least one of:

coding the video frame having been subject to the image processing, to determine or obtain the coded code stream;

coding the video frame having been subject to the image processing, and the at least one frame transformation mode and/or the combined transformation mode, to determine or obtain the coded code stream;

coding the video frame having been subject to the image processing, and the at least one frame transformation mode and/or the combined transformation mode corresponding to each image processing, to determine or obtain the coded code stream; or

coding the video frame having been subject to the image processing, the at least one frame transformation mode and/or the combined transformation mode corresponding to each image processing, and an image processing sequence corresponding to the image processing, to determine or obtain the coded code stream.

6. A processing method, comprising a step of:
S20: determining or obtaining a decoded video frame, according to at least one frame transformation mode and/or a combined transformation mode obtained by combining a plurality of frame transformation modes and/or at least one code stream.

7. The method of claim 6, wherein the at least one frame transformation mode comprises a frame transformation mode and/or a frame transformation mode sequence; and/or the method further comprises at least one of:

decoding the code stream, to determine or obtain a video frame having been subject to image processing and/or the at least one frame transformation mode and/or the combined transformation mode obtained by combining the plurality of frame transformation modes; or

decoding the code stream, to determine or obtain a video frame having been subject to image processing, an image processing sequence, and the at least one frame transformation mode and/or the combined transformation mode obtained by combining the plurality of frame transformation modes.

8. The method of claim 6 or 7, wherein the step S20 comprises at least one of:

> taking the video frame having been subject to image processing as the decoded video frame; performing inverse processing on the video frame having been subject to image processing, according to the at least one frame transformation mode and/or the combined transformation mode obtained by combining the plurality of frame transformation modes, to obtain the decoded video frame; or
>
> performing inverse processing on the video frame having been subject to image processing, according to the at least one frame transformation mode and/or the combined transformation mode obtained by combining the plurality of frame transformation modes, as well as the image processing sequence, to obtain the decoded video frame.

9. A processing device, comprising: a memory and a processor, wherein the memory having a computer program thereon, which, when executed by the processor, implements the step of the processing method of any one of claims 1-8.

10. A storage medium, having a computer program stored thereon, which, when executed by a processor, implements the step of the processing method of any one of claims 1-8.

Fig. 1

Fig. 2

S10

Determining or obtaining a coded code stream corresponding to a video frame to be coded, according to at least one frame transformation mode and/or a combined transformation mode obtained by combining a plurality of frame transformation modes

## Fig. 3

Fig. 4

Fig. 5

Fig. 6

Fig. 7

Fig. 8

Fig. 9

Fig. 10

Fig. 11

Fig. 12

Fig. 13

180-degree rotation

Fig. 14

Fig. 15

Fig. 16

Fig. 17

Input video

Divided into blocks

Fig. 18

Fig. 19

Processing the video frame to be coded, according to the at least one frame transformation mode and/or the combined transformation mode obtained by combining the plurality of frame transformation modes — S11

Determining or obtaining the coded code stream corresponding to the video frame having been subject to image processing — S12

Fig. 20

1/2 downsampling

Left rotation by 90 degrees

Horizontal flip

## Fig. 21

S20

Determining or obtaining a decoded video frame, according to at least one frame transformation mode and/or a combined transformation mode obtained by combining a plurality of frame transformation modes, and/or at least one code stream

## Fig. 22

Processing apparatus

Coding module — A10

## Fig. 23

Processing apparatus

Decoding module — A20

## Fig. 24

## INTERNATIONAL SEARCH REPORT

| International application No. |
| --- |
| **PCT/CN2024/073710** |

### A. CLASSIFICATION OF SUBJECT MATTER

H04N19/103(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT; ENTXTC; ENTXT; DWPI; CNKI; IEEE; JVET: 图像, 变换, 预测, 编码, 解码, 译码, 压缩, 帧, 组合, 顺序, 帧变换, 几何变换, 下采样, 上采样, 线性变换, 翻转, 旋转, VVC, H.266, cod+, encod+, decod+, compress+, sample, linear+, image, video, frame, convers+, transfer+, mode, flip+

### C. DOCUMENTS CONSIDERED TO BE RELEVANT

| Category* | Citation of document, with indication, where appropriate, of the relevant passages | Relevant to claim No. |
| --- | --- | --- |
| PX | CN 115802031 A (SHENZHEN TRANSSION HOLDINGS CO., LTD.) 14 March 2023 (2023-03-14)<br>claims 1-10 | 1-10 |
| X | CN 109923865 A (HUAWEI TECHNOLOGIES CO., LTD. et al.) 21 June 2019 (2019-06-21)<br>description, pages 20-42, and claims 1-34 | 1-10 |
| X | CN 107155107 A (TENCENT TECHNOLOGY (SHENZHEN) CO., LTD.) 12 September 2017 (2017-09-12)<br>description, paragraphs 55-148 | 1-10 |
| A | CN 112995663 A (HUAWEI TECHNOLOGIES CO., LTD.) 18 June 2021 (2021-06-18)<br>entire document | 1-10 |
| A | CN 113132740 A (SUN YAT-SEN UNIVERSITY) 16 July 2021 (2021-07-16)<br>entire document | 1-10 |
| A | US 2021185312 A1 (GOOGLE LLC) 17 June 2021 (2021-06-17)<br>entire document | 1-10 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **27 March 2024** | **03 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073710**

| Patent document cited in search report | | | Publication date (day/month/year) | Patent family member(s) | | | Publication date (day/month/year) |
|---|---|---|---|---|---|---|---|
| CN | 115802031 | A | 14 March 2023 | None | | | |
| CN | 109923865 | A | 21 June 2019 | WO | 2018170793 | A1 | 27 September 2018 |
| | | | | EP | 3591973 | A1 | 08 January 2020 |
| | | | | EP | 3591973 | A4 | 18 March 2020 |
| | | | | US | 2020021850 | A1 | 16 January 2020 |
| CN | 107155107 | A | 12 September 2017 | US | 2019253704 | A1 | 15 August 2019 |
| | | | | US | 10721466 | B2 | 21 July 2020 |
| | | | | WO | 2018171447 | A1 | 27 September 2018 |
| | | | | JP | 2019537365 | A | 19 December 2019 |
| | | | | JP | 6854888 | B2 | 07 April 2021 |
| | | | | KR | 20190103297 | A | 04 September 2019 |
| | | | | EP | 3606067 | A1 | 05 February 2020 |
| | | | | EP | 3606067 | A4 | 04 November 2020 |
| | | | | IN | 201917019371 | A | 13 September 2019 |
| CN | 112995663 | A | 18 June 2021 | WO | 2021109978 | A1 | 10 June 2021 |
| | | | | US | 2022295071 | A1 | 15 September 2022 |
| | | | | EP | 4060990 | A1 | 21 September 2022 |
| CN | 113132740 | A | 16 July 2021 | None | | | |
| US | 2021185312 | A1 | 17 June 2021 | US | 2022217336 | A1 | 07 July 2022 |
| | | | | US | 11284071 | B2 | 22 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310042266